(19) Europäisches Patentamt
European Patent Office
Office européen des brevets

(11) **EP 4 189 381 B1**

(12) **FASCICULE DE BREVET EUROPEEN**

(45) Date de publication et mention
de la délivrance du brevet:
**08.01.2025 Bulletin 2025/02**

(21) Numéro de dépôt: **21799078.7**

(22) Date de dépôt: **29.07.2021**

(51) Classification Internationale des Brevets (IPC):
**G01N 29/06** *(2006.01)*     **G01N 29/32** *(2006.01)*
**G01N 29/44** *(2006.01)*

(52) Classification Coopérative des Brevets (CPC):
**G01N 29/262; G01N 29/043; G01N 29/0645;
G01N 29/0654; G01N 29/069; G01N 29/265;
G01N 29/27; G01N 29/32; G01N 29/4463;**
G01N 2291/106; G01N 2291/2634

(86) Numéro de dépôt international:
**PCT/FR2021/051424**

(87) Numéro de publication internationale:
**WO 2022/023681 (03.02.2022 Gazette 2022/05)**

(54) **PROCÉDÉ DE CONTRÔLE DYNAMIQUE PAR IMAGERIE ULTRASONORE**

VERFAHREN ZUR DYNAMISCHEN KONTROLLE MITTELS ULTRASCHALLBILDGEBUNG

METHOD OF DYNAMIC CONTROL USING ULTRASOUND IMAGING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.07.2020 FR 2008092**

(43) Date de publication de la demande:
**07.06.2023 Bulletin 2023/23**

(73) Titulaire: **Vallourec Tubes France
92190 Meudon (FR)**

(72) Inventeurs:
• **LAZZARI, Olivier
92190 Meudon (FR)**
• **NDAO, Bada
92190 Meudon (FR)**

(74) Mandataire: **Casalonga
Casalonga & Partners
Bayerstraße 71/73
80335 München (DE)**

(56) Documents cités:
**WO-A1-95/28883          US-A- 5 299 576
US-A1- 2007 053 566     US-A1- 2014 293 736**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

### Domaine technique

L'invention se rapporte au domaine des contrôles non destructifs tel qu'un contrôle de conformité non destructif de produits métalliques. L'invention se rapporte plus particulièrement au contrôle par ultrasons de la présence de défauts au sein d'un produit métallique tubulaire.

### Arrière-plan technologique

Des tubes métalliques sont largement utilisés dans différents domaines de l'industrie de l'énergie tels que la production électrique, le pétrole et le gaz, ainsi que dans la construction mécanique. Comme la plupart des produits métallurgiques, les tubes sont susceptibles de présenter des défauts liés à leur fabrication, tels que des inclusions de matière dans l'acier, des fissures sur leur surface interne ou leur surface externe, ou encore des porosités. De manière générale, toute hétérogénéité dans la matrice d'acier est vue comme une imperfection qui est susceptible de nuire à la résistance mécanique du tube en service.

Les tubes sont donc contrôlés après leur fabrication, non seulement pour y détecter d'éventuels défauts, mais aussi, le cas échéant, pour déterminer des informations utiles à l'évaluation de la dangerosité de ces défauts, notamment leur taille, leur profondeur, leur position, leur nature ou encore leur orientation, et la satisfaction de ces tubes à des normes.

On utilise en particulier des techniques de contrôle non destructif à l'aide d'ondes ultrasonores. On fait se propager des ondes ultrasonores dans le tube et l'on recherche, parmi les ondes réfléchies par le tube, celles qui ne peuvent être imputés à la géométrie du tube. Des défauts tels que des inclusions ou des absences de matière constituent des variations au sein du milieu de propagation de l'onde, et génèrent de ce fait la réflexion d'une partie de l'énergie des ondes ultrasonores lorsqu'ils sont frappés par ces ondes ultrasonores.

Un type de capteur utilisé pour le contrôle à l'aide d'ondes ultrasonores est de type multi-éléments et commandé séquentiellement, généralement nommé "transducteur multi-éléments" ou par l'expression anglaise *"phased array"*. Ce type de capteur comprend une pluralité d'éléments électroacoustiques, généralement sous la forme d'éléments piézoélectriques. Ces éléments piézoélectriques peuvent être répartis sur une face active du capteur entourant le tube à contrôler ou selon une direction d'alignement principale de manière à former une "barrette".

Dans la stratégie d'acquisition appelée FMC (de l'anglais « *Full Matrix Capture* »)*,* avec un capteur multi-élément comportant un nombre n d'éléments, chacun des n élément du capteur est excité une fois, ces n éléments étant excités en succession afin de générer un nombre n d'émissions ultrasonores successives. Un circuit de traitement enregistre la réponse individuelle, par la suite appelée A-scan, des n éléments du capteur pour chacune des n émissions. Pour chaque élément, cette réponse individuelle représente l'amplitude des ondes ultrasonores reçues par ledit élément au cours d'une durée d'écoute donnée. Il est alors possible d'obtenir une image représentative d'une section du tube en combinant les $n^2$ A-scans enregistrés au moyen d'un algorithme TFM (de l'anglais « Total Focusing Method »), autrement appelé FTP (Focalisation en Tout Point) en français.

Afin d'obtenir des images TFM sur toute la surface du tube, l'acquisition à partir d'une pluralité de tirs successifs nécessite un déplacement relatif du capteur par rapport au tube de façon séquentielle. Le capteur est maintenu en position fixe par rapport au tube pendant une série complète de n tirs afin d'obtenir une image TFM en mode statique du tube dans cette position, puis le capteur est déplacé par rapport au tube pour effectuer la série de n tirs suivante en vue d'obtenir l'image suivante du tube.

Cette méthode permet d'obtenir des image précises du tube mais nécessite un temps d'acquisition important. Il existe donc un besoin pour un procédé permettant d'obtenir une image précise d'une pièce à contrôler de façon rapide et fiable.

US-5299576 divulgue un procédé de contrôle par imagerie ultrasonore d'un objet en mouvement, comportant une étape d'acquisition de données par un capteur multi-éléments, une étape de génération de données représentatives de l'objet en fonction des ondes réfléchies par l'objet, une étape de calcul d'un déplacement correctif en fonction du déplacement relatif entre le capteur et l'objet, et une étape de correction desdites données représentatives en fonction dudit déplacement correctif.

US-10156549 décrit un procédé de contrôle par ultrasons d'un objet tel qu'un corps humain ou une conduite métallique, comportant l'entrainement d'un capteur multi-éléments en déplacement le long de la surface de l'objet, l'acquisition de données par le capteur, et la génération de données représentatives de l'objet en fonction des ondes réfléchies par l'objet; une cale de couplage sépare l'objet contrôlé du capteur.

### Résumé

Une idée à la base de l'invention est d'obtenir des données représentatives d'une pièce à contrôler, par exemple des images TFM ou des A-Scans d'un tube, de façon rapide et fiable. En particulier, une idée à la base de l'invention est d'obtenir des données représentatives de la pièce à contrôler durant un déplacement relatif entre le capteur permettant d'obtenir ces données et la pièce à contrôler. Plus particulièrement, une idée à la base de l'invention est d'obtenir ces données au cours d'un déplacement relatif continu entre le capteur et la pièce à contrôler. Une idée à la base de l'invention est de prendre en compte le déplacement relatif entre le capteur et la pièce à contrôler pour la génération des données représentatives de l'élément à contrôler fiables et précises.

L'invention fournit un procédé d'acquisition dynamique de données représentatives d'une pièce à contrôler, tel que défini dans la revendication 1**.**

On entend par données représentatives d'une pièce à contrôler des informations relatives à la forme, l'épaisseur, les différences de milieux etc. de la pièce à contrôler. Selon l'invention, ces données représentatives de la pièce à contrôler comportent une pluralité de A-Scans de la pièce à contrôler. Par ailleurs, la durée par rapport à l'instant de référence correspond au différentiel de temps entre le temps d'acquisition d'une donnée représentative de la pièce à contrôler et l'instant de référence, cette durée étant positive ou négative selon que ledit temps d'acquisition est antérieur ou postérieur à l'instant de référence.

Grâce à ces caractéristiques, il est possible d'obtenir des données représentatives d'une pièce à contrôler de façon fiable et rapide. En effet, grâce à ces caractéristiques il est possible d'obtenir ces données rapidement du fait que le capteur et la pièce à contrôler sont en mouvement l'un par rapport à l'autre. En outre, du fait de l'application d'une correction en fonction du déplacement relatif entre le capteur et la pièce à contrôler, de la position de référence et de la durée par rapport à l'instant de référence, il est possible d'obtenir des données représentatives de la pièce à contrôler dans la position de référence présentant un degré de précision élevé malgré le déplacement relatif entre le capteur et la pièce à contrôler au cours de l'acquisition desdites données.

Selon des modes de réalisation, un tel procédé d'acquisition dynamique peut comporter une ou plusieurs des caractéristiques suivantes.

Selon un mode de réalisation, le déplacement relatif entre le capteur et la pièce à contrôler est continu. Un tel déplacement continu au cours de l'acquisition des données permet une bonne vitesse d'exécution du procédé.

La pièce à contrôler peut prendre de nombreuses formes. Selon un mode de réalisation, la pièce à contrôler est un tube. Un tel tube peut avoir de nombreuses formes de section, comme par exemple circulaire, carrée ou autre. De même, un tel tube peut être d'épaisseur constante ou variable.

Selon un mode de réalisation, l'application d'une correction aux données représentatives de la pièce à contrôler comporte une étape d'application d'un déplacement virtuel, par exemple une rotation virtuelle autour d'un axe de rotation de la pièce à contrôler, auxdites données représentatives de la pièce à contrôler de manière à générer des données corrigées. On entend par déplacement virtuel la modification des données représentatives du profil de la pièce à contrôler pour simuler un déplacement correctif de la pièce à contrôler sans que ladite pièce à contrôler n'effectue physiquement un tel déplacement correctif.

Selon un mode de réalisation, le calcul du déplacement correctif comporte le calcul d'un déplacement correctif respectif pour une plusieurs ou chacune des données représentatives de la pièce à contrôler. Selon un mode de réalisation, la durée par rapport à l'instant de référence pour un déplacement correctif respectif correspond à la durée par rapport à l'instant de référence correspondant au différentiel de temps entre l'instant correspondant à la position relative entre le capteur et la pièce à contrôler représenté par ladite donnée représentative de la pièce à contrôler et l'instant de référence, cette durée étant positive ou négative selon que ledit instant représenté par la donnée représentative de la pièce à contrôler à corriger est antérieur ou postérieur à l'instant de référence. Selon un mode de réalisation, l'application de la correction est réalisé pour une, plusieurs ou chaque données représentative de la pièce à contrôler en fonction du déplacement correctif respectif associé à ladite donnée représentative de la pièce à contrôler.

Selon un mode de réalisation, l'étape d'acquisition de données comporte

- l'émission d'une pluralité de tirs ultrasonores, de préférence de manière successive dans le temps, et
- pour chaque étape d'émission d'un dit signal ultrasonore, une étape correspondante, durant une durée d'écoute respective, de réception des ondes ultrasonores par lesdits éléments récepteurs du capteur, lesdites ondes ultrasonores reçues comportant au moins une onde réfléchie par la pièce à contrôler résultant du tir ultrasonore émis correspondant

et dans lequel l'instant de référence est un instant d'émission d'un tir ultrasonore de la pluralité de tirs ultrasonores et la durée est un multiple de la durée séparant deux tirs ultrasonores successifs de la pluralité de tirs ultrasonores de sorte que le déplacement correctif est calculé en fonction du déplacement relatif entre le capteur et la pièce à contrôler entre l'émission de deux tirs ultrasonores distincts.

Deux tirs ultrasonores, et de préférence tous les tirs ultrasonores, sont effectués séquentiellement, c'est-à-dire à des instants d'émissions distincts, de manière à éviter les interférences entre ondes ultrasonores émises depuis des éléments émetteurs distincts.

Le déplacement correctif peut être calculé pour différentes portions d'un déplacement relatifs entre le capteur et la pièce à contrôler. Selon un mode de réalisation, le déplacement correctif est calculé en fonction du déplacement relatif entre le capteur et la pièce à contrôler entre l'émission de deux tirs ultrasonores distincts, par exemple deux tirs ultrasonores successifs. Autrement dit, selon un mode de réalisation, la position de référence est la position relative entre le capteur et la pièce à contrôler à un instant de référence correspondant à l'émission d'un tir ultrasonore.

Grâce à ces caractéristiques, et en particulier grâce à la réalisation d'une pluralité de tirs à partir d'une pluralité d'éléments émetteurs du capteur, il est possible d'obtenir des informations sur la pièce à contrôler selon des orientations différentes de ladite pièce à contrôler. En particulier, chaque tir ultrasonore permet d'obtenir un ensemble de données relatives à la pièce à contrôler selon un cheminement de l'onde ultrasonore identifié, ledit cheminement partant de la position de l'élément émetteur et engendrant des ondes réfléchies reçues aux positions respectives des éléments récepteurs recevant lesdites ondes réfléchies.

Selon un mode de réalisation, l'étape de génération des données corrigées comporte une sélection d'une position de référence. Selon un mode de réalisation, la position de référence correspond à une position relative entre la pièce à contrôler et le capteur lors d'un tir ultrasonore sélectionné. Selon un mode de réalisation, la position de référence, et donc l'instant de référence correspondant, est fournie préalablement par exemple en étant sélectionnée par défaut, par exemple en étant enregistré dans une mémoire de stockage du système mettant en oeuvre le procédé. Selon un mode de réalisation, la position de référence est la position relative entre le capteur et la pièce à contrôler à l'instant du premier tir. Selon un mode de réalisation, la position de référence est la position relative entre le capteur et la pièce à contrôler à l'instant du dernier tir ultrasonore émis.

Ainsi, il est possible d'obtenir une image nette de la pièce à contrôler dans une position définie, typiquement la position de référence.

Selon l'invention, les données représentatives de la pièce à contrôler comportent une intensité des ondes ultrasonores réfléchies par la pièce à contrôler et reçues par chaque élément récepteur du capteur au cours du temps. Des données représentatives de la pièce à contrôler sous cette forme sont appelées ci-après A-Scans. Les données représentatives de la pièce à contrôler comportent les A-Scans générés à partir des ondes ultrasonores reçues par chacun des éléments récepteurs du capteur à la suite d'un même signal ultrasonore émis par un élément émetteur du capteur.

Selon un mode de réalisation, les données représentatives de la pièce à contrôler comportent les A-Scans générés à partir des ondes ultrasonores reçues par un, plusieurs ou chacun des éléments récepteurs du capteur à la suite d'une pluralité de tirs ultrasonores émis successivement par un élément émetteur correspondant du capteur, et de préférence d'une pluralité de tirs ultrasonores respectifs émis successivement par plusieurs éléments émetteurs distincts du capteur. Selon un mode de réalisation, les données représentatives de la pièce à contrôler comportent une matrice comportant les A-Scans générés à partir d'une pluralité de tirs ultrasonores successifs et des ondes réfléchies par la pièce à contrôler suites auxdits tirs ultrasonores et reçues par une pluralité d'éléments récepteurs.

Selon un mode de réalisation, les données représentatives de la pièce à contrôler comportent une image partielle pour un, plusieurs ou chaque tirs ultrasonores de la pluralité de tirs ultrasonores émis lors de l'étape d'acquisition, l'application d'une correction aux données représentatives de la pièce à contrôler comportant une étape de modification de l'image partielle pour simuler un déplacement de la pièce à contrôler depuis la position relative entre le capteur et la pièce à contrôler illustrée sur ladite image partielle jusqu'à la position de référence afin de générer une image partielle corrigée.

Selon un mode de réalisation, une image partielle est générée en fonction des ondes réfléchies par la pièce à contrôler qui résultent d'un même tir ultrasonore. Selon un mode de réalisation, chaque point d'une image partielle est déterminé en fonction des A-Scans générés à partir des ondes réfléchies par la pièce à contrôler qui sont reçues par les éléments récepteurs suite à l'émission d'un même signal ultrasonore.

Selon un mode de réalisation, le procédé comporte la génération d'une image représentative de la pièce à contrôler en fonction des données corrigées. Selon un mode de réalisation, le procédé comporte en outre une étape de génération d'une image représentative de la pièce à contrôler par superposition d'une pluralité d'image partielles corrigées.

De telles images partielles et images partielles corrigées permettent d'obtenir une image représentative de la pièce à contrôler et donc des informations sur la pièce à contrôler de façon rapide et claire, par exemple sur la localisation, les dimensions et d'autres caractéristiques d'un défaut présent dans la pièce à contrôler.

Selon un mode de réalisation, les données représentatives de la pièce à contrôler comportent une matrice, chaque ligne de la matrice comportant les données représentatives de la pièce à contrôler générées suite à un tir ultrasonore respectif, chaque colonne de la matrice comportant les données représentatives de la pièce à contrôler générées à partir d'un élément récepteur respectif du capteur, le calcul du déplacement correctif comportant pour chaque tir ultrasonore un calcul d'un décalage de réception respectif en nombre d'éléments récepteur du capteur, l'application d'une correction comportant pour un, plusieurs ou chaque lignes de la matrice l'application pour des cellules de ladite ligne d'un décalage, en nombre de colonnes, du contenu desdites cellules du décalage de réception correspondant.

Selon un mode de réalisation, la durée d'écoute présente un instant de début égal à l'instant d'émission du tir ultrasonore, ladite durée d'écoute étant supérieure ou égale à un temps de vol maximal entre l'émission du tir ultrasonore et la réception par un dit élément récepteur du capteur d'une onde réfléchie par une face de la pièce à contrôler opposée au capteur de sorte que le déplacement correctif est calculé en fonction du déplacement relatif entre le capteur et la pièce à contrôler durant un temps de propagation entre un instant d'émission d'un tir ultrasonore et un instant de réception des ondes réfléchies par la pièce à contrôler résultant dudit tir ultrasonore par le ou les éléments récepteurs. Selon un mode de réalisation, l'instant de réception final correspond à la durée d'écoute, c'est-à-dire à l'instant à compter duquel, suite à un tir ultrasonore, le ou les éléments récepteurs sont configurés pour ne plus recevoir les ondes ultrasonores, et en particulier les ondes ultrasonores résultant dudit tir ultrason. Autrement dit, selon un mode de réalisation, le déplacement correctif est calculé en fonction du déplacement relatif entre le capteur et la pièce à contrôler au cours de la propagation d'un même tir ultrasonore depuis son émission jusqu'à la réception des ondes réfléchies par la pièce à contrôler résultant de ce tir ultrasonore par le ou les éléments récepteurs.

Selon l'invention, les données représentatives de la pièce à contrôler comportent, pour chaque élément récepteur, un A-Scan respectif représentatif d'une intensité des ondes reçues par ledit récepteur en fonction d'un temps d'écoute dudit élément récepteur.

Selon un mode de réalisation, le calcul du déplacement correctif comporte le découpage, pour les A-Scans respectifs des éléments récepteurs, en une pluralité de blocs temporels.

Selon un mode de réalisation, le calcul du déplacement correctif comporte le calcul d'une durée de réception de signal par un dit élément récepteur de la pluralité d'éléments récepteurs en fonction du déplacement relatif entre le capteur et la pièce à contrôler. Selon un mode de réalisation, chaque bloc temporel d'un dit A-Scan présente une durée égale à la durée de réception de signal de l'élément récepteur pour le déplacement relatif du capteur par rapport à la pièce à contrôler.

Selon un mode de réalisation, la durée de réception de signal par un dit élément récepteur correspond à la durée durant laquelle, au cours du déplacement relatif entre le capteur et la pièce à contrôler, un signal émis de façon continue depuis la pièce à contrôler est reçu par ledit élément récepteur, une durée supérieure à cette durée de réception entraînant la réception dudit signal continu par un élément récepteur adjacent.

Selon un mode de réalisation, un, plusieurs ou chaque bloc temporel présente une durée égale à une durée de réception de signal du récepteur ayant reçu les ondes réfléchies par la pièce à contrôler ayant permis de générer ledit A-Scan.

Selon un mode de réalisation, le calcul du déplacement correctif comporte le calcul d'un décalage en nombre d'éléments récepteurs en fonction des positions relatives des éléments récepteurs, des durées de réception de signal desdits éléments récepteurs et de l'instant d'émission du signal ultrasonore.

Selon un mode de réalisation, le décalage est un nombre entier représentant, pour un bloc temporel donné d'un A-Scan d'origine, le nombre de A-Scans dont ledit bloc temporel doit être décalé selon la direction de déplacement relatif entre la pièce à contrôler et le capteur. Autrement dit, le décalage représente le nombre de A-Scans entre le A-Scan d'origine et un A-Scan cible auquel ledit bloc temporel doit être attribué pour la même plage temporelle.

Selon un mode de réalisation, pour un bloc temporel donné d'un A-Scan d'origine, le décalage est égal au nombre maximal d'éléments récepteurs successifs suivants, selon une direction de déplacement relatif entre le capteur et la pièce à contrôler et à partir de l'élément récepteur ayant reçu les ondes réfléchies dudit A-Scan d'origine, c'est-à-dire en fonction d'une position de référence et du sens de rotation de la pièce, dont la somme cumulée des durées de réception de signal est inférieure à la durée écoulée entre l'instant de référence et l'instant de début dudit bloc temporel.

Selon un mode de réalisation, l'application d'une correction comporte pour au moins un bloc temporel du A-Scan d'origine, le remplacement d'une portion d'un A-Scan cible par ledit bloc temporel, ledit A-Scan cible correspondant au A-Scan généré à partir du n$^{ième}$ élément récepteur suivant le récepteur ayant reçu les parties de l'énergie des ondes réfléchies du A-Scan d'origine, dans le sens de déplacement relatif entre le capteur et la pièce à contrôler, n étant le décalage calculé, la portion du A-Scan cible présentant le même instant de début et de fin que le bloc temporel.

Selon un mode de réalisation, le déplacement relatif entre le capteur et la pièce à contrôler résulte d'un déplacement de la pièce à contrôler et du maintien en position fixe du capteur au cours du déplacement de la pièce à contrôler, le déplacement de la pièce à contrôler présentant une composante angulaire autour d'un axe de rotation, le calcul d'un déplacement correctif comportant une étape de calcul du déplacement angulaire de la pièce à contrôler au cours dudit déplacement relatif entre le capteur et la pièce à contrôler.

Selon un mode de réalisation, le calcul d'un déplacement correctif comporte une étape de calcul du déplacement angulaire de la pièce à contrôler au cours dudit déplacement relatif entre le capteur et la pièce à contrôler et dans lequel la correction des données représentatives de la pièce à contrôler comporte la simulation d'une rotation de la pièce à contrôler autour de son axe de rotation selon un angle correspondant au déplacement angulaire de la pièce à contrôler au cours de l'étape d'acquisition.

Ainsi, en corrigeant directement les A-Scans, il est possible d'obtenir une image nette et précise de la pièce à contrôler en prenant en compte le déplacement relatif entre la pièce à contrôler et le capteur y compris au cours de la propagation d'un même tir ultrasonore au sein de la pièce à contrôler.

Selon un mode de réalisation, le déplacement relatif entre le capteur et la pièce à contrôler peut-être de différentes natures.

Selon un mode de réalisation, le déplacement relatif entre le capteur et la pièce à contrôler résulte d'un déplacement de la pièce à contrôler et du maintien en position fixe du capteur au cours du déplacement de la pièce à contrôler. Selon un mode de réalisation, le déplacement de la pièce à contrôler présente une composante angulaire autour d'un axe de rotation, par exemple l'axe longitudinal d'un tube dans le cadre d'une pièce à contrôler sous la forme de tube. Selon un mode de réalisation, le déplacement de la pièce à contrôler présente une composante longitudinale le long d'un axe longitudinal, par exemple l'axe longitudinal du tube contrôlé. La pièce à contrôler est, par exemple, entrainée en déplacement hélicoïdal par rapport au capteur. Selon un mode de réalisation, le déplacement relatif entre le capteur et la pièce à contrôler résulte du déplacement du capteur et du maintien en position fixe de la pièce à contrôler.

Selon un mode de réalisation, le calcul d'un déplacement correctif comporte une étape de calcul du déplacement angulaire de la pièce à contrôler. Selon un mode de réalisation, le calcul du déplacement correctif comporte un calcul du déplacement relatif entre le capteur et la pièce à contrôler le long d'un axe de déplacement relatif entre le capteur et la pièce à contrôler.

Selon un mode de réalisation, la génération de l'image représentative de la pièce à contrôler est réalisée en fonction des A-Scans corrigés.

## Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

[fig.1] La figure 1 est une vue en coupe d'un tube présentant un défaut et d'un capteur multi-élément configuré pour générer des données représentatives du tube ;

[fig.2] La figure 2 est une matrice de données représentatives du tube générées à partir du capteur de la figure 1 ;

[fig.3] La figure 3 est une vue en coupe du tube de la figure 1 lors d'une rotation dudit tube d'un angle $\alpha$ entre deux tirs ultrasonores successifs ;

[fig.4] La figure 4 est une image représentative du tube obtenue à partir de la matrice de la figure 2 dans le cas d'un déplacement du tube à une vitesse de rotation de 0.109 m/s ;

[fig.5] La figure 5 est une image analogue à la figure 4 dans le cas d'un déplacement du tube à une vitesse de rotation de 0.36 m/s ;

[fig.6] La figure 6 est une image analogue à la figure 4 dans le cas d'un déplacement du tube à une vitesse de rotation de 0.8 m/s ;

[fig.7] La figure 7 est une vue en coupe du tube de la figure 1 illustrant différentes positions du défaut du tube en fonction de la rotation du tube dans le cadre d'un capteur multi-élément circulaire entourant le tube ;

[fig.8] La figure 8 est une représentation simplifiée d'une matrice analogue à la matrice de la figure 2 obtenue au moyen du capteur de la figure 7 et illustrant la correction réalisée en fonction d'une rotation du tube ;

[fig.9] La figure 9 est une vue en coupe du tube de la figure 1 illustrant différentes positions du défaut du tube en fonction de la rotation du tube au cours d'un même tir ultrasonore ;

[fig.10] La figure 10 est une représentation de différents A-Scans obtenus par le capteur de la figure 9 au cours du tir ultrasonore ;

[fig.11] La figure 11 est une représentation des différents A-Scans corrigés obtenus à partir des A-Scans d'origine illustrés sur la figure 10.

[fig.12] La figure 12 illustre une image brute et les amplitudes des pixels de la colonne 150 de cette image brute en l'absence de correction ;

[fig.13] La figure 13 illustre une image corrigée obtenue en modifiant les données ayant permis la génération de l'image brute de la figure 12 pour prendre en compte le déplacement relatif entre le tube et le capteur ainsi que les amplitudes des pixels de la colonne 150 de cette image corrigée.

**Description des modes de réalisation**

L'exploitation pétrolière, de gaz ou autre nécessite un nombre important de tubes. Du fait des nombreuses contraintes que subissent ces tubes aussi bien lors de leur installation que durant leur exploitation, ces tubes répondent à des normes afin d'éviter toute dégradation et toute fuite dans l'environnement.

Les éléments tubulaires fabriqués pour ce type d'exploitation doivent donc être contrôlés afin de s'assurer qu'ils ne présentent pas de défauts pouvant remettre en question leur exploitation. Pour effectuer ce contrôle, des données représentatives du tube sont générées à l'aide de capteurs, ces données permettant de détecter la présence et les caractéristiques de défauts éventuels du tube. De tels défauts sont par exemple des fissures en surface ou bien des discontinuités dans la matière à l'intérieur de la paroi du tube.

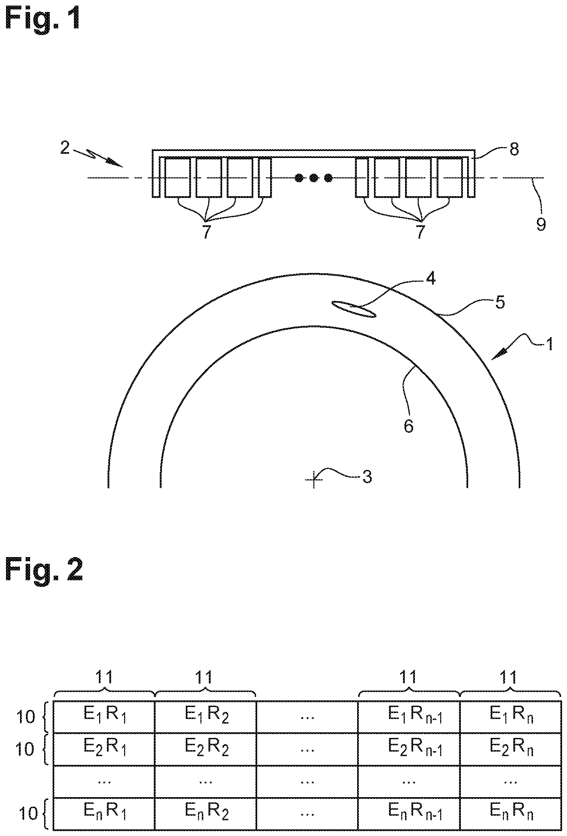

La figure 1 illustre schématiquement une vue en coupe d'un tube 1 et un capteur 2.

Le tube 1 est de forme cylindrique circulaire et présente un axe longitudinal 3. Le tube 1 présente un défaut 4. Le défaut 4 est par exemple une fissure dans la paroi du tube 1, c'est-à-dire que ce défaut 4 est situé entre une surface externe 5 du tube 1 et une surface interne 6 dudit tube 1.

Pour fournir des données représentatives du tube 1, le capteur 2 comporte une pluralité d'éléments 7. Dans le mode de réalisation illustré sur la figure 1, le capteur 2 comporte un boîtier 8 portant l'ensemble des éléments 7. Ces éléments 7 sont alignés selon un axe longitudinal 9 du capteur 2.

Chaque élément 7 est apte à d'une part émettre une onde ultrasonore E, aussi appelé tir ultrasonore E, et, d'autre part, recevoir des ondes reçues R. A titre d'exemple, un élément 7 peut être une bande piézoélectrique présentant une largeur de 1mm et une longueur, aussi appelée élévation, de 10mm.

Le capteur 2 est positionné en périphérie, par exemple au-dessus, du tube 1 de sorte que les éléments 7 soient orientés pour émettre l'onde ultrasonore E en direction du tube 1. Par exemple, le capteur 2 est positionné de manière à présenter son axe longitudinal 9 perpendiculairement à l'axe longitudinal 3 du tube 1. Un couplant sépare le tube 1 de la surface du capteur 2 pour permettre la propagation des ondes ultrasonores E, par exemple une colonne d'eau, du gel ou tout autre milieu permettant la propagation de l'onde ultrasonore.

Lorsqu'une onde ultrasonore rencontre un changement de milieu au cours de sa propagation, une partie de l'énergie de l'onde ultrasonore est transmise au nouveau milieu et une partie de l'énergie de l'onde ultrasonore est renvoyée par réflexion sur l'interface entre les deux milieux. Ainsi, une partie de l'énergie de l'onde ultrasonore E émise par un élément 7 du capteur 2 est renvoyée pour chaque changement de milieu de propagation rencontré de sorte qu'une partie de l'énergie de l'onde ultrasonore E est réfléchie lorsque cette onde ultrasonore E atteint respectivement la surface externe 5 du tube 1, le défaut 4 ou encore la surface interne 6 du tube 1.

Après chaque émission d'onde ultrasonore E, on enregistre le signal représentatif des ondes ultrasonores reçues et/ou de l'absence d'ondes ultrasonores reçues par chacun des éléments 7. Ces enregistrements sont effectués durant une plage de temps prédéterminée qui suit l'émission d'une onde ultrasonore E. Durant cette plage de temps, les ondes ultrasonores reçues par l'élément 7 comportent les ondes résultant de la réflexion de l'onde ultrasonore sur le tube 1.

Les éléments 7 permettent ainsi de générer, à partir de l'ensemble des ondes reçues R, et donc des ondes réfléchies à la suite à un tir ultrasonore E, des A-Scans représentatifs du tube 1. Chaque A-Scan représente l'amplitude des ondes reçues R par un élément 7 en fonction du temps, cette amplitude étant nulle lorsque l'élément 7 ne reçoit pas d'onde ultrasonore. Ces A-Scans permettent donc de connaître l'état du tube 1 en fonction de la position de l'élément d'émission de l'onde ultrasonore E, de l'élément de réception des ondes réfléchies, du temps de vol des ondes ultrasonores et des milieux de propagation.

Lors du contrôle du tube 1, des tirs ultrasonores E sont effectués successivement avec chacun des éléments 7 du capteur 2. Pour chaque tir ultrasonore E, on obtient ainsi une pluralité de données de type A-scans comportant les ondes ultrasonores réfléchies par le tube 1 et reçues par chacun des éléments 7 du capteur 2.

Pour un capteur 2 comportant n éléments 7, l'ensemble des A-Scans générés à partir des tirs ultrasonores E successifs et des ondes ultrasonores reçues R par les n éléments 7 sont enregistrés dans une matrice telle qu'illustrée sur la figure 2, où le A-scan correspondant à l'émission par l'élément n et la réception par l'élément m est enregistré dans la cellule $E_nR_m$. Une telle matrice peut être obtenue de différentes manières, c'est-à-dire selon différentes stratégies d'acquisition des A-Scans. Selon un mode de réalisation, la stratégie d'acquisition de la matrice est de type TFM, de l'acronyme anglais « total focusing method ». Selon un mode de réalisation, la méthode d'acquisition est de type « sparse-TFM » (ce qui signifie que toutes les cellules de la matrice ne contiennent pas de A-scan (émission et/ou réception avec une partie des éléments), PWI (de l'anglais « Plane Wave Imaging »), c'est-à-dire que plusieurs ou tous les éléments sont utilisés en émission pour chaque tir ultrasonore, avec différents angles d'incidence au moyen d'une loi de retard permettant de défléchir le faisceau ultrasonore, sparse-PWI, ou toute autre méthode d'acquisition consistant à enregistrer des A-scans associés à une multitude de trajectoires ultrasonores parcourues entre un ou plusieurs éléments en émission et un ou plusieurs éléments en réception.

Dans une telle matrice, chaque ligne 10 représente l'ensemble des A-Scans générés à partir des n éléments 7 du capteur 2 suite à l'émission d'une onde ultrasonore $E_i$ émise par un $i^{ème}$ élément 7. Ces A-Scans sont donc représentatifs des ondes reçues $R_1$ à $R_n$ par les n éléments 7 suite à l'émission de l'onde ultrasonore $E_i$. Ainsi, la première ligne 10 de la matrice illustrée sur la figure 2 comporte un ensemble de données $E_1R_1$, $E_1R_2$ ... $E_1R_{n-1}$, $E_1R_n$, correspondant aux A-Scans générés à partir des ondes reçues $R_1$, $R_2$...$R_{n-1}$ et $R_n$ par les n éléments 7 suite à l'émission du tir ultrasonore $E_1$ par le premier élément 7. De façon analogue, la dernière ligne 10 de cette matrice comporte un ensemble de données $E_nR_1$, $E_nR_2$....$E_nR_{n-1}$ et $E_nR_n$ correspondant aux A-Scans générés à partir des ondes reçues $R_1$ à $R_n$ par les n éléments 7 suite à l'émission du tir ultrasonore $E_n$ par le $n^{ième}$ élément 7.

Par ailleurs, chaque colonne 11 de cette matrice comporte l'ensemble des A-Scans générés à partir des ondes reçues $R_i$ par un $i^{ème}$ élément 7 suite aux n tirs ultrasonores $E_1$ à $E_n$ successifs par les n éléments 7. Ainsi, la première colonne 11 de la matrice illustrée sur la figure 2 comporte un ensemble de données $E_1R_1$, $E_2R_1$... $E_nR_1$ correspondant aux A-Scans générés à partir des ondes reçues $R_1$ par le premier élément 7 suite aux n tirs ultrasonores $E_1$ à $E_n$ par les n éléments 7.

La matrice (également appelée « matrice FMC ») illustrée sur la figure 2 comporte donc n lignes et n colonnes, chaque ligne 10 correspondant à l'ensemble des A-Scans générés suite à l'émission d'un tir ultrasonore $E_i$ par un $i^{ème}$ élément 7 du capteur 2 et chaque colonne 11 correspondant aux A-Scans générés à partir des ondes reçues $R_j$ par un $j^{ème}$ élément 7 du capteur 2.

La matrice illustrée sur la figure 2 comportant un ensemble de données représentatives du tube 1, il est possible de reconstituer à partir de cette matrice une image correspondant à une représentation en coupe du tube 1. Dans une telle image, chaque pixel de l'image est associé à une valeur représentative du milieu de propagation du tube 1. Par exemple, une telle image comporte, pour chaque point de l'image, la somme des valeurs des différents A-Scans de la matrice en fonction des temps de vol théoriques au niveau dudit point de l'image. Autrement dit, l'ensemble des A-Scans de la matrice sont analysés et compilés pour définir les propriétés acoustiques du tube 1 au niveau dudit point de l'image. Pour chaque A-Scan et pour chaque point de l'image est associé un temps de vol théorique de l'onde ultrasonore qui correspond au temps nécessaire à l'onde ultrasonore E partant de l'élément émetteur pour atteindre le point de l'image ciblé additionné au temps nécessaire pour qu'une onde réfléchie depuis ledit point de l'image ciblé atteigne l'élément récepteur correspondant au A-Scan.

L'amplitude du signal du A-Scan au temps de vol théorique ainsi déterminé est représentative du matériau constitutif du tube 1 pour le point ciblé. Si le tube 1 ne présente pas de défaut ou de changement de nature du milieu au point de l'image ciblé, l'onde ultrasonore E émise n'est pas réfléchie au niveau dudit point ciblé de sorte qu'il n'y a pas d'onde réfléchie et le signal du A-Scan de l'élément 7 récepteur présente une amplitude nulle, ou équivalente au bruit de fond par exemple lié au système électronique ou autres perturbations, au temps de vol théorique déterminé. Inversement, si le point de l'image ciblé correspond à un défaut ou changement de milieu dans le tube 1, alors l'onde ultrasonore E émise est réfléchie audit point ciblé de l'image de sorte que le signal du A-Scan de l'élément 7 récepteur présente une amplitude non nulle au temps de vol théorique, cette amplitude non nulle étant représentative de l'onde réfléchie au niveau du point ciblé de l'image. L'image obtenue en additionnant pour chaque pixel l'amplitude des différents A-Scans en fonction des temps de vols théoriques correspondants permet donc de déterminer la nature du milieu dans lequel circulait l'onde ultrasonore E au niveau de chaque point de l'image.

Lorsque les tirs ultrasonores E successifs sont émis sans déplacement relatif entre le capteur 2 et le tube 1, l'analyse de l'ensemble des A-Scans de la matrice en fonction des temps de vols permet d'obtenir une image du tube 1 nette et de bonne qualité. Toutefois, cette immobilité relative entre le capteur 2 et le tube 1 lors de l'acquisition des données représentatives du tube 1 nécessite un temps d'acquisition des données important. En effet, il est nécessaire de conserver le positionnement relatif entre le capteur 2 et le tube 1 pendant l'acquisition de l'ensemble des A-Scans d'une matrice, c'est-à-dire depuis le premier tir ultrasonore $E_1$ jusqu'à la réception des ondes reçues $R_n$ suite au dernier tir ultrasonore $E_n$ par le dernier élément récepteur 7. Cette solution est donc difficilement compatible avec un processus industriel qui nécessite l'analyse de grandes longueurs de tube 1 la plus rapide possible.

Afin d'améliorer la vitesse d'acquisition des données représentatives du tube 1, le tube 1 et le capteur 2 sont entraînés en déplacement relatif durant l'acquisition des données. Ce déplacement relatif entre le tube 1 et le capteur 2, et donc les éléments 7, est de préférence continu.

Dans le cadre de la description ci-dessous, l'acquisition de données représentatives du tube 1 est réalisée en maintenant le capteur 2, et donc les éléments 7, dans une position fixe et en entraînant le tube 1 en déplacement selon un mouvement hélicoïdal autour de son axe longitudinal 3. Un tel déplacement relatif entre le tube 1 et les éléments 7 est équivalent à un déplacement des éléments 7 d'une part en translation le long de l'axe longitudinal 3 du tube 1 et, d'autre part, en rotation autour dudit axe longitudinal 3 du tube 1. Un tel déplacement hélicoïdal du tube 1 est par exemple effectué à une vitesse de rotation autour de l'axe longitudinal 3 du tube 1 de l'ordre de 1m/s. Cependant, ce déplacement relatif entre le tube 1 et le capteur 2 pourrait également être obtenu par un maintien en position fixe du tube 1 et un entraînement en rotation du capteur 2 autour du tube 1 ou par tout autre mouvement relatif entre le capteur 2 et le tube 1.

Le déplacement relatif entre le tube 1 et les éléments 7 implique un déplacement relatif du défaut 4 par rapport aux éléments 7. Ce déplacement relatif se traduit par un décalage angulaire de la localisation du défaut 4 autour de l'axe longitudinal 3 du tube 1 par rapport aux éléments 7. Entre deux tirs ultrasonores E successifs, les données enregistrées par les éléments 7 au sein d'une même matrice présentent donc un décalage angulaire correspondant au déplacement relatif entre le tube 1 et les éléments 7.

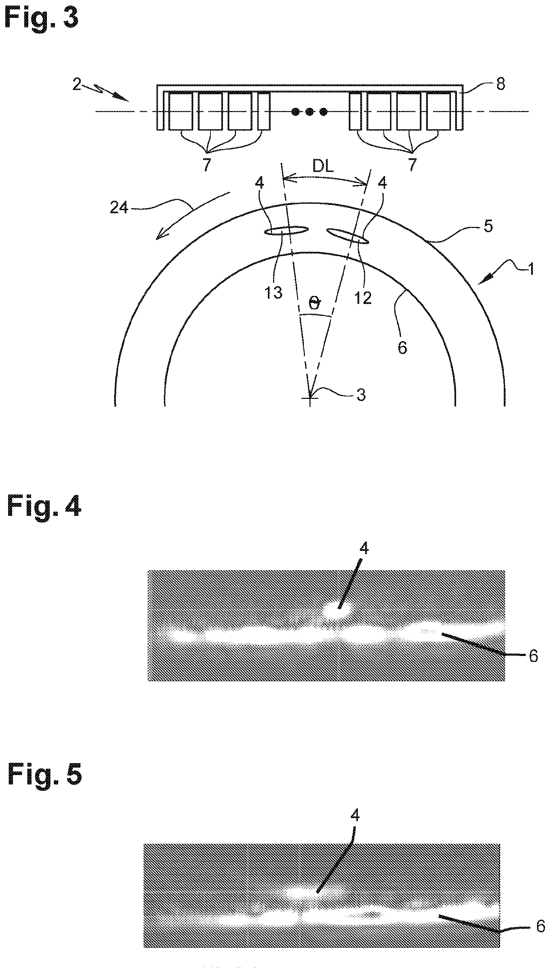

La figure 3 illustre un tel déplacement du défaut 4 d'un angle $\theta$ entre deux tirs ultrasonores $E_i$ et $E_{i+1}$ successifs. Ce déplacement du défaut 4 est lié à la rotation du tube 1 selon un sens de rotation 24 autour de l'axe longitudinal 3. Pour une question de lisibilité et de compréhension, le même défaut 4 est illustré à la fois dans une première position 12 et dans une deuxième position 13 sur la figure 3 illustrant ainsi le décalage d'angle $\theta$ dans le positionnement du défaut 4 entre deux tirs ultrasons $E_i$ et $E_{i+1}$ successifs.

Au regard de cette figure 3, il est clair qu'on ne peut pas obtenir une image nette du tube 1 avec la méthode décrite ci-dessus. En effet, du fait de ce déplacement du défaut 4 entre les deux tirs ultrasonores $E_i$ et $E_{i+1}$ successifs, les A-Scans générés à partir de ces deux tirs ultrasonores $E_i$ et $E_{i+1}$ successifs ne présentent pas des amplitudes représentatives du défaut 4 à une même localisation dans le tube 1. Pour un point ciblé d'une image du tube 1, les A-Scans résultant du tir ultrasonore $E_i$ présentent une amplitude correspondant à la présence du défaut 4 dans une première position 12 alors que les A-Scans résultant du tir ultrasonore $E_{i+1}$ présentent une amplitude correspondant à la présence du défaut 4 dans une deuxième position 13, cette deuxième position 13 étant décalée de l'angle $\theta$ par rapport à la première position 12. Par conséquent, la somme des amplitudes des différents A-Scans pour un point ciblé de l'image n'est plus représentative de la structure du tube 1 puisque, pour un même point ciblé de l'image, les amplitudes des différents A-Scans de la matrice ne correspondent pas à une même position du défaut 4. L'image ainsi obtenue à partir de la matrice est donc floue, le défaut 4 étant indiqué de manière imprécise sur l'image, le défaut 4 apparaissant sous la forme d'une traînée formant un arc-de-cercle au lieu d'une tâche bien définie.

L'effet de flou de l'image est d'autant plus fort que la vitesse de rotation du tube 1 autour de son axe longitudinal 3 est importante. En effet, plus le tube 1 tourne rapidement autour de son axe longitudinal 3, plus le décalage angulaire $\theta$ du défaut 4 entre deux tirs ultrasonores $E_i$ et $E_{i+1}$ est important et donc plus le décalage angulaire de positionnement du défaut 4 entre ces deux tirs ultrasonores $E_i$ et $E_{i+1}$ successifs est important.

Les figures 4 à 6 illustrent à titre d'exemple trois images générées dans le cadre d'un tube 1 et d'un capteur 2 analogues à ceux ci-dessus en regard des figures 1 à 3 avec un entraînement en déplacement hélicoïdal du tube 1 à des vitesses différentes. Ces images précises sont générées à l'aide d'un capteur 2 de 10MHz comportant 64 éléments 7 espacés de 0.35 mm centre à centre.

La figure 4 représente une image précise obtenue par suite aux tirs ultrasonores E de l'ensemble des éléments 7 avec une vitesse de rotation du tube 1 de 0.109 m/s.

La figure 5 représente une image précise obtenue suite aux tirs ultrasonores E de l'ensemble des éléments 7 avec une vitesse de rotation du tube 1 de 0.36 m/s.

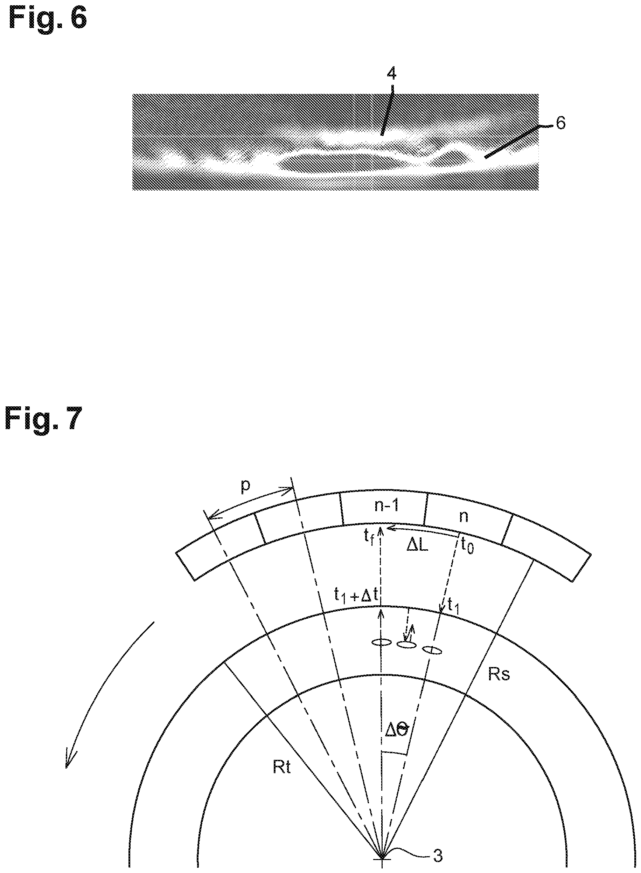

La figure 6 représente une image précise obtenue suite aux tirs ultrasonores E de l'ensemble des éléments 7 avec une vitesse de rotation du tube 1 de 0.8 m/s.

Avec un entraînement en rotation du tube 1 à une vitesse de rotation réduite de 0.109 m/s (figure 4), la rotation du tube 2 n'a pas d'impact perceptible sur l'image obtenue qui montre le défaut 4 bien localisé et dimensionnable de façon fiable. Cependant, cette vitesse est trop réduite et ne correspond pas aux cadences industrielles.

Avec une vitesse de rotation du tube 1 de 0.36 m/s, l'image obtenue permet de détecter la présence du défaut 4 sans plus d'informations sur ce défaut 4. En effet, le défaut 4 est représenté sur cette image de la figure 5 de façon si floue que seule l'information sur la présence d'un défaut 4 peut être obtenue sur cette image, sans autres détails sur les caractéristiques de ce défaut 4. Avec une vitesse de rotation du tube 1 de 0.8 m/s telle qu'illustrée sur la figure 6, l'image obtenue est encore plus floue et même la détection du défaut 4 peut être sujette à caution car son amplitude s'en trouve d'autant plus amoindrie qu'il occupe une grande surface sur l'image.

Afin d'obtenir une image non floue malgré le déplacement relatif entre le tube 1 et le capteur 2, la reconstruction de l'image selon l'invention tient avantageusement compte du mouvement relatif entre le tube 1 et le capteur 2 au cours de l'acquisition des données. Pour cela, les données représentatives du tube 1 obtenues au cours de déplacement relatif entre le tube 1 et le capteur 2 sont corrigées.

Une idée à la base de cette correction est d'acquérir les données représentatives du tube 1 durant un déplacement relatif entre le tube 1 et le capteur 2 puis de modifier ces données en simulant un déplacement du tube 1 autour d'une position de référence. Cette position de référence est une position relative entre le capteur 2 et le tube 1 au cours du déplacement du tube 1. Cette position de référence peut être prédéterminée ou bien sélectionnée arbitrairement. Cette position de référence peut être n'importe quelle position relative entre le capteur 2 et le tube 1 lors du déplacement du tube 1, par exemple la position relative entre le tube 1 et le capteur 2 à un instant de référence correspondant à l'instant d'émission premier tir ultrasonore $E_1$ ou encore du dernier tir ultrasonore $E_n$.

La modification des données par simulation d'un déplacement relatif entre le tube 1 et le capteur 2 jusqu'à la position de référence choisie permet de générer des données corrigées correspondant sensiblement aux données qui auraient été obtenues en l'absence de mouvement relatif entre le tube 1 et le capteur 2 au niveau de ladite position de référence. Autrement dit, l'idée est de générer des données représentatives du tube 1 au cours d'un déplacement relatif entre le tube 1 et le capteur 2, puis de modifier ces données pour simuler une acquisition desdites données dans le cadre d'une position relative statique entre le tube 1 et le capteur 2.

Dans la suite de la description, cette position de référence et l'instant de référence associé correspondent à la position relative entre le tube 1 et le capteur 2 à l'instant d'émission du premier tir ultrasonore $E_1$. Ainsi, la prise en compte du déplacement du tube 1 revient à simuler, pour chaque tir, une inversion dudit déplacement du tube 1 depuis la position correspondant aux données à corriger jusqu'à la position du premier tir ultrasonore $E_1$.

Afin de simuler une inversion du déplacement relatif entre le tube 1 et le capteur 2 entre deux tirs ultrasonores $E_i$ et $E_{i+1}$ successifs, chaque tir ultrasonore E est traité individuellement pour générer une image partielle respective. Cette image partielle correspond à une vue en coupe du tube 1 dans la position relative respective du tube 1 par rapport au capteur 2 générée par les données issues d'un unique tir ultrasonore E. Une pluralité d'images partielles sont donc générées, chaque image partielle étant générée à partir des données obtenues suite à un tir ultrasonore E respectif. Ces images partielles sont générées de façon analogue à la méthode décrite ci-dessus mais en ne prenant en compte que les A-Scans obtenus pour un tir ultrasonore E donné (c'est-à-dire une seule ligne de la matrice FMC) et non pas à partir des A-Scans de toute la matrice.

Une telle image partielle comporte, pour chaque pixel de l'image partielle, la somme des amplitudes des A-Scans générés à partir d'un unique tir ultrasonore E. Chaque pixel de l'image partielle est donc associé à la somme des amplitudes des A-Scans d'un unique tir ultrasonore E.

Cependant, du fait que chaque image partielle n'est formée qu'à partir d'un unique tir ultrasonore E, chaque image partielle est représentative du tube 1 dans une position relative propre du tube 1 par rapport au capteur 2. Afin de combiner les différentes images partielles obtenues dans le but d'obtenir une image nette et précise du tube 1, il est nécessaire de tenir compte du décalage angulaire entre les différents tirs ultrasonores E successifs. Pour cela, les images partielles générées à partir des lignes de A-Scans de la matrice sont modifiées en simulant l'inversion du mouvement entre le tube 1 et le capteur 2 depuis une position relative de référence afin d'obtenir des images partielles corrigées.

Pour simuler une inversion du mouvement relatif entre le tube 1 et le capteur 2, il est nécessaire de connaître le mouvement relatif effectué entre le tube 1 et le capteur 2 entre deux tirs ultrasonores $E_i$ et $E_{i+1}$ successifs.

Dans le cadre d'un entraînement hélicoïdal du tube 1 entraînant un déplacement en rotation dudit tube 1 autour de son axe longitudinal 3 à une vitesse de $V_{rot}$, avec un capteur 2 présentant un nombre PRF (de l'expression anglaise « Pulse Repetition Frequency ») de tirs ultrasonores par seconde, la surface externe 5 du tube 1 se déplace entre deux tirs ultrasonores $E_i$ et $E_{i+1}$ successifs d'une distance $\Delta L$ répondant à l'équation $\Delta L = V_{rot}/PRF$.

Cependant, entre un premier tir ultrasonore $E_i$ effectué par un élément émetteur i à un temps $t_i$ et un deuxième tir ultrasonore $E_{i+1}$ effectué par un élément émetteur i+1 à un temps $t_{i+1}$, le défaut 4 s'est déplacé d'un angle $\Delta\theta$. Cet angle $\Delta\theta$ correspond à la rotation du tube 1 autour de son axe longitudinal 3 pendant un intervalle de temps $\Delta t = t_{i+1} - t_i$ entre deux tirs ultrasonores $E_i$ et $E_{i+1}$ successifs. La distance $\Delta L$ parcourue par la surface externe 5 entre deux tirs ultrasons $E_i$ et $E_{i+1}$ successifs répond donc également à l'équation $\Delta L = R^* \Delta\theta$, dans laquelle R est le rayon du tube 1 au niveau de la surface externe 5 et $\Delta\theta$ est l'angle exprimé en radians correspondant à la rotation du tube 1 autour de son axe longitudinal 3 entre deux tirs ultrasons $E_i$ et $E_{i+1}$ successifs.

Il résulte de ces deux équations que $\Delta\theta = V_{rot}/(R^*PRF)$.

En regard de la matrice illustrée sur la figure 2, cela signifie qu'entre deux lignes 10 de ladite matrice, et donc entre deux tirs ultrasonores $E_i$ et $E_{i+1}$ successifs, les données enregistrées sont décalées d'un angle $\Delta\theta$ répondant à l'équation $\Delta\theta = V_{rot}/(R^*PRF)$. Autrement dit, les images partielles générées à partir de deux lignes 10 successives de la matrice illustrée sur la figure 2 sont décalées géométriquement par une rotation d'angle $\Delta\theta$ autour d'un point qui est le centre de rotation du tube 1, en théorie son axe 3.

Comme expliqué ci-dessus, l'image partielle obtenue à partir du premier tir ultrasonore $E_1$ est sélectionnée de manière arbitraire comme position relative de référence. La position angulaire du tube 1 par rapport à cette position angulaire de référence est alors calculée pour l'ensemble des autres tirs ultrasonores $E_i$. Dans l'exemple donné ci-dessus, la deuxième image partielle obtenue à partir du tir ultrasonore $E_2$ présente un décalage angulaire du tube 1 d'angle $\Delta\theta$ autour de son axe de rotation par rapport à l'image partielle de référence, la $i^{ième}$ image partielle obtenue à partir du $i^{ième}$ tir ultrasonore présentant un décalage angulaire d'angle $(i-1)^*\Delta\theta$ autour de son axe de rotation par rapport à l'image partielle de référence.

Les images partielles sont alors corrigées en appliquant à la position du tube 1 représentée sur lesdites images partielles une rotation inverse au décalage angulaire calculé. Dans le cadre d'un tube 1 effectuant une rotation d'un angle $\Delta\theta$ entre deux tirs ultrasonores $E_i$ et $E_{i+1}$ successifs, cela revient à générer les images partielles puis, pour chaque $i^{ième}$ image partielle ainsi générée, simuler sur ladite image partielle une rotation du tube 1 autour de son axe longitudinal 3 d'un angle $\alpha=(i-1)^* \Delta\theta$ selon un sens de rotation inverse au sens de rotation du tube 1.

En regard de la matrice illustrée sur la figure 2 en prenant la première image partielle comme image de référence, l'image partielle corrigée générée à partir de la première ligne 10 de la matrice est identique à l'image partielle générée à partir de ladite première ligne 10 puisque, dans ce cas, i=1 et la correction à effectuer par rapport à l'image partielle de référence correspond à une rotation d'un angle $\alpha$=(1-1)* $\Delta\theta$=0 autour de l'axe longitudinal 3 du tube 1. L'image partielle corrigée générée à partir de la deuxième ligne 10 de la matrice correspond à l'application d'une rotation du tube 1 d'un angle $\alpha$=(2-1)* $\Delta\theta$=$\Delta\theta$ autour de l'axe longitudinal 3 du tube 1 selon un sens de rotation opposé au sens de rotation du tube 1 à l'image partielle générée à partir de ladite deuxième ligne 10 de la matrice. De manière générale, l'image partielle corrigée générée à partir d'une n$^{\text{ième}}$ ligne 10 de la matrice correspond à l'application d'une rotation d'un angle $\alpha$=(n-1)* $\Delta\theta$ autour de l'axe longitudinal 3 du tube 1 selon un sens de rotation opposé au sens de rotation du tube 1 à l'image partielle générée à partir de ladite n$^{\text{ième}}$ ligne 10 de la matrice.

Avec une telle correction, les images partielles corrigées sont assimilables à des images qui auraient été obtenues au moyen d'un capteur 2 fixe par rapport au tube 1 à partir d'un unique tir ultrasonore E respectif. Les images partielles corrigées ainsi obtenues présentent donc une position identique du défaut 4 malgré le déplacement dudit défaut 4 au cours de l'acquisition des données, cette position du défaut 4 correspondant à la position de référence. Une image nette du tube 1 peut alors être générée en superposant après rotation les images partielles corrigées obtenues, c'est-à-dire en additionnant les amplitudes représentatives du tube 1 pour chaque pixel des images partielles corrigées qui sont combinées.

L'image obtenue par superposition après rotation des images partielles corrigées ne génère pas d'effet de flou et permet d'obtenir une image nette et précise du tube 1 sur laquelle il est possible de caractériser de façon précise la forme et la taille des défauts 4 détectés.

L'exemple ci-dessus est donné dans le cadre d'un tube 1 tel qu'illustré sur la figure 3 qui est entraîné en rotation par rapport à des éléments 7 alignés selon l'axe longitudinal 9 perpendiculairement à l'axe longitudinal 3 du tube 1. Cependant, la correction pourrait s'appliquer de manière analogue avec toute autre forme de pièce à contrôler ainsi que pour toute autre nature de déplacement relatif. L'idée est de générer des données représentatives d'une pièce à contrôler au cours d'un déplacement relatif entre ladite pièce et le capteur, puis de modifier ces données en simulant un déplacement relatif de sorte que les données corrigées soient analogues à des données qui auraient été obtenues en l'absence de déplacement relatif entre la pièce à contrôler et le capteur.

A titre d'exemple, dans le cadre d'un mouvement relatif sous la forme d'une translation le long de l'axe longitudinal 3 du tube 1, c'est-à-dire sans rotation du tube 1, la correction consisterait à simuler un déplacement relatif le long dudit axe longitudinal 3 du tube 1 jusqu'à la position de référence, c'est-à-dire à générer des images partielles corrigées par translation le long de l'axe 3 du tube 1 et selon un sens de translation amenant à la position de référence les images partielles obtenues à partir de la matrice.

De façon alternative, il est possible de simuler une inversion du mouvement du tube 1 sans générer d'images partielles. Dans un mode de réalisation alternatif, la correction se fait en décalant directement les A-Scans dans la matrice. Ce mode de réalisation permet d'obtenir une matrice corrigée à partir de laquelle une image nette de la section du tube peut être obtenue directement par la méthode de sommation des amplitudes des A-Scans décrite ci-dessus.

La figure 7 illustre le cas d'un capteur 2 encerclant de n éléments. Dans cet exemple, le tube 1 seul est entraîné en rotation autour de son axe longitudinal 3. Cette figure 7 illustre en particulier le décalage de réception, en nombre d'éléments récepteurs 7, des ondes reçues R du fait de la rotation du tube 1. Sur cette figure 7, un tir ultrasonore E est émis au temps $t_0$, cette onde ultrasonore E entre dans le tube au temps $t_i$, une onde réfléchie R ressort du tube 1 au temps ti+$\Delta$t et est reçue par l'élément récepteur 7 au temps $t_f$.

Lorsque le tube 1 effectue une rotation d'un angle $\Delta\theta$ pendant un intervalle de temps $\Delta$t, la rotation du tube 1 génère un décalage entre les points d'émission et de réception du tir ultrasonore E d'une distance $\Delta$L sur la surface du capteur 2. Afin de faciliter la compréhension de ce phénomène, l'exemple illustré sur la figure 7 présente le cas d'un $\Delta$L égal au pitch du capteur 2, c'est-à-dire à la distance entre le centre de deux éléments 7 adjacents, mais l'invention s'applique de façon analogue à toute autre valeur de $\Delta$L.

Dans le cas illustré sur la figure 7, on obtient les équations suivantes :

$$\Delta L = Rs \times \Delta\theta \qquad (1)$$

$$\Delta\theta = V_\theta \times \Delta t \qquad (2)$$

$$V_{rot} = V_\theta \times Rt \qquad (3)$$

dans lesquelles Rs est le rayon interne du capteur 2, $V_\theta$ est la vitesse de rotation angulaire du tube 1 en rad/s, $V_{rot}$ est la vitesse de rotation du tube 1 en m/s et Rt est le rayon externe du tube 1.

Une distance en nombres d'éléments $D_{él}$ entre les points d'émission et de réception du tir ultrasonore E sur le capteur 2, au cours d'un seul et même tir ultrasonore E, exprimé en nombre d'éléments 7 du capteur 2, correspond au rapport entre $\Delta L$ et le pitch p du capteur 2, c'est-à-dire répondant à l'équation suivante :

$$D_{él} = \Delta L / p \qquad (4).$$

Au regard des équations 1 à 3 ci-dessus, il résulte que :

$$D_{él} = (Rs \times V_{rot} \times \Delta t) / (p \times Rt) \qquad (5)$$

Ainsi, en sélectionnant comme position de référence la position initiale du tube 1 au début de l'acquisition, typiquement lors de l'émission du premier tir ultrasonore $E_1$, le déplacement du tube 1 à la fin de l'écoute des ondes reçues R suite au premier tir ultrasonore $E_1$ est égal à la rotation effectuée pendant un intervalle de temps $\Delta t$ illustré par exemple à la figure 7. De même, par rapport à cette position initiale du tube 1, le déplacement du tube 1 à la fin de l'écoute des ondes reçues suite au deuxième tir ultrasonore $E_2$ est égal à la rotation effectuée pendant un intervalle de temps $\Delta t + 1/PRF$. De manière générale, par rapport à cette position initiale du tube 1 au début de l'acquisition, le déplacement du tube 1 à la réception des ondes reçues R résultant du $k^{ème}$ tir est égal à la rotation effectuée pendant un intervalle de temps $\Delta t + (k-1)/PRF$.

La distance $D_{él}(k)$ entre les points d'émission et de réception sur le capteur 2, pour le $k^{ème}$ tir et exprimée en nombre d'éléments du capteur 2, répond donc à l'équation :

$$D_{él}(k) = (\Delta L + \Delta L2) / p \qquad (6)$$

Avec :

$$\Delta L2 = Rs \times \Delta\theta PRF \qquad (7),$$

et

$$\Delta\theta PRF = V_\theta / PRF \qquad (8)$$

Où $\Delta\theta PRF$ est l'angle de rotation du tube 1, pendant un intervalle de temps 1/PRF

On obtient donc :

$$D_{él}(k) = [(Rs \times V_{rot}) / (p \times Rt)] \times [\Delta t + (k-1) / PRF)] \qquad (9)$$

Une fois calculé $D_{él}(k)$ pour chacun des n tirs ultrasonores E de l'acquisition, on peut faire les approximations suivantes :

Si $D_{él}(k) < 0.5$, le décalage en nombre d'éléments est nul ;
Si $0.5 < D_{él}(k) < 1.5$, le décalage en nombre d'éléments est de 1 élément ;
Si $x+0.5 < D_{él}(k) < x+1.5$, le décalage en nombre d'éléments est de x+1 éléments.

Le calcul de $D_{él}$ permet de corriger directement la matrice en décalant directement dans la matrice les A-Scans enregistrés. Typiquement, comme expliqué ci-dessus au regard de la figure 2, lorsque la matrice est générée, la cellule $E_i R_j$ de la matrice contient le A-scan des ondes reçues suite au tir ultrasonore émis par l'élément i et dont les ondes réfléchies sont reçues par l'élément j. Cependant, les ondes réfléchies résultant du tir ultrasonore $E_i$ qui devraient être reçues par l'élément j en l'absence de mouvement relatif entre le tube 1 et le capteur 2 sont, du fait de la rotation du tube 1 au cours de l'acquisition des données, reçues par l'élément $j+D_{él}(i)$. Ainsi, le A-scan $E_i R_j$ se trouve en réalité dans la cellule $E_i R_{(j \pm Dél(i))}$ de la matrice, en fonction du sens de rotation du tube 1 par rapport au sens de numérotation des éléments 7 du capteur 2. Il est donc nécessaire de tenir compte de ce décalage $D_{él}$ afin d'obtenir une matrice corrigée. Une image complète non floue peut alors être obtenue selon la méthode décrite ci-dessus en additionnant les amplitudes des A-Scans de la matrice corrigée obtenue.

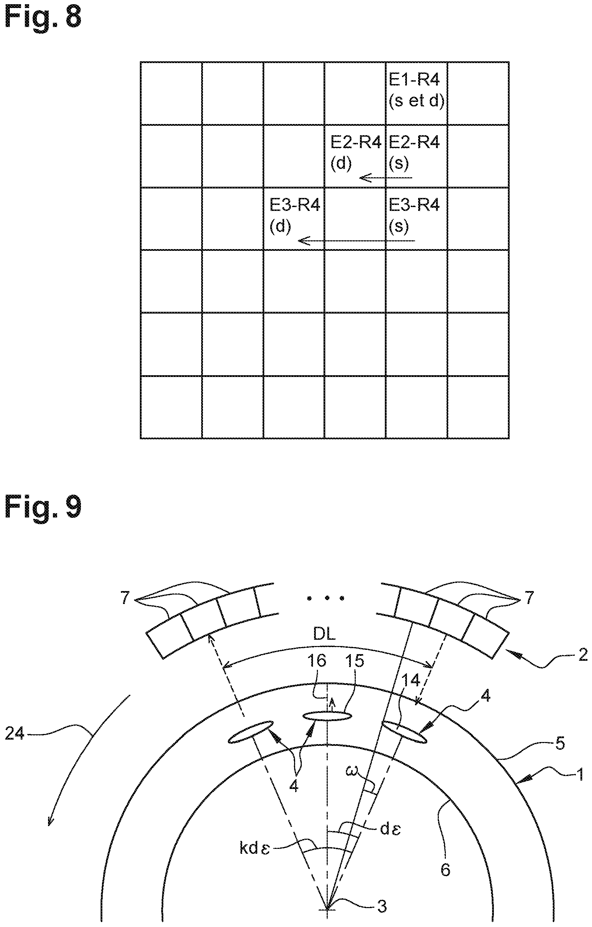

La figure 8 illustre un exemple de matrice montrant des positions initiales des A-Scans générés, notés $E_i R_j(s)$, et des positions corrigées desdits A-Scans dans la matrice, notés $E_i R_j(d)$. Dans cet exemple, le décalage en nombre d'éléments $D_{él}$ calculé augmente de un élément à chaque nouveau tir ultrasonore E par rapport au tir ultrasonore $E_1$ initial.

Sur cette figure 8, le premier tir ultrasonore $E_1$, ou tir initial, ne nécessite pas de décalage des A-Scans $EiR_j(s)$ dans la première ligne 10. Les A-Scans $EiR_j(s)$ de la deuxième ligne 10 sont décalés de une colonne en fonction du sens de rotation du tube 1, de une colonne vers la gauche dans l'exemple illustré. De même, les A-Scans $EiR_j(s)$ de la troisième ligne 10 sont décalés de deux colonnes vers la gauche de la figure 8, etc. On obtient ainsi une matrice corrigée dans laquelle les A-Scans $E_iR_j(d)$ associés aux différentes cellules correspondent aux A-Scans qui seraient générés en l'absence de mouvement relatif entre le tube 1 et le capteur 2. Il est alors possible de générer une image nette en additionnant les amplitudes des A-Scans $E_iR_j(d)$ aux temps de vols adéquats de cette matrice corrigée comme expliqué ci-dessus.

Lorsque le décalage $D_{él}$ entraîne un décalage du contenu des cellules hors de la matrice, la matrice est avantageusement augmentée d'un nombre d'éléments correspondant, le calcul de l'image nette prenant en compte des éléments 7 ajoutés virtuellement au capteur 2, ces éléments 7 étant ajoutés dans la continuité des éléments 7 du capteur 2, c'est-à-dire avec un pitch identique. Dans une variante, ces A-Scans décalés hors de la matrice peuvent être ignorés, mais l'image nette est alors calculée à partir d'un nombre réduit de A-Scans.

Afin d'améliorer la netteté des images obtenues, il est également possible de prendre en compte la rotation du tube 1 autour de son axe longitudinal 3 pendant la propagation de chaque tir ultrasonore E dans le tube 1. En effet, si la vitesse de rotation du tube 1 est particulièrement élevée, il est possible que le défaut 4 se déplace de façon significative entre le moment d'émission d'un tir ultrasonore E et le moment de réception des ondes ultrasonores réfléchies résultant de ce tir ultrasonore E.

La description ci-dessous est réalisée dans le cadre d'une vitesse de rotation élevée entraînant le déplacement du défaut 4 au cours de la propagation d'un tir ultrasonore E, mais ce déplacement pourrait également être lié à d'autres facteurs que la vitesse de rotation. De tels facteurs peuvent, par exemples, être la hauteur de la colonne d'eau et/ou l'épaisseur du tube 1, qui impactent également le temps de vol de l'onde ultrasonore et par conséquent la PRF (de l'anglais « pulse repetition frequency »).

A partir d'une certaine vitesse de rotation du tube 1, la rotation du tube 1 durant la propagation d'un tir ultrasonore E est telle que l'énergie émise par un même tir ultrasonore E est reçue par les éléments 7 avec un décalage spatial de réception. Ainsi, entre l'instant d'émission du tir ultrasonore E par un élément 7 du capteur 2 et l'instant de la réception d'une onde renvoyée R par réflexion résultant de ce tir ultrasonore E, le tube 1 peut avoir exécuté une rotation telle que l'onde réfléchie n'est pas reçue par l'élément 7 qui aurait dû être l'élément 7 récepteur ciblé si le tube 1 était resté fixe, mais par un autre élément 7.

La figure 9 illustre ce phénomène de décalage de réception des ondes réfléchies au cours de la propagation d'un même tir ultrason E dans le tube 1. Sur cette figure 9, le capteur 2 est circulaire et les éléments 7 sont agencés de façon circulaire autour du tube 1.

Sur cette figure 9, un tir ultrasonore $E_n$ est émis par l'élément n. Ce tir ultrasonore $E_n$ impacte la surface externe 5 du tube 1 au temps ti, le défaut 4 étant alors dans une première position 14 par rapport au capteur 2. Le tir ultrasonore $E_n$ se propage ensuite dans le tube 1.

Au temps ti+dt, dt représentant un temps de rotation du tube 1, le tube 1 a effectué une rotation d'angle dξ. Audit temps ti+dt, le tir ultrasonore $E_n$ a atteint le défaut 4, le défaut 4 ayant alors une deuxième position 15, et une onde réfléchie 16 résultant de la réflexion du tir ultrasonore $E_n$ sur ce défaut 4 se dirige vers la surface externe 5 du tube 1.

Au temps ti+k*dt, l'onde réfléchie 16 résultant de la réflexion du tir $E_n$ sur le défaut 4 revient à la surface externe 5 du tube 1 et ressort du tube 1. Au dit temps ti+k*dt, le tube 1 a effectué une rotation autour de son axe longitudinal 3 d'un angle k*dξ. Pendant le temps k*dt, la surface externe 5 du tube 1 a tourné d'une distance DL répondant à l'équation DL= $V_{rot}$*k*dt

Si le temps de propagation k*dt du tir ultrasonore $E_n$ dans le tube 1 et/ou que la vitesse de rotation $V_{rot}$ du tube 1 sont tels que DL est négligeable par rapport à la distance angulaire entre les centres de deux éléments 7 adjacents, et de préférence par rapport à la distance séparant les centres de deux éléments 7 adjacents divisée par deux, alors il peut être considéré que le déplacement du tube 1 par rapport au capteur 2 est négligeable au cours d'un tir même ultrasonore E. La rotation du tube 1 est donc considérée insuffisante pour créer un décalage de réception au cours d'un même tir ultrasonore E

Si le temps de propagation k*dt du tir ultrasonore $E_n$ dans le tube 1 et/ou que la vitesse de rotation $V_{rot}$ du tube 1 sont tels que DL est supérieur à la distance séparant les centres de deux éléments 7 adjacents, certaines des ondes réfléchies reçues par les éléments 7 récepteurs auraient normalement dû être reçues par d'autres éléments. En conséquence, les ondes réfléchies R reçues par un élément récepteur 25 suite au tir ultrasonore E émis par un élément émetteur 26 ne sont pas représentatifs d'un cheminement de propagation identifié pour l'association entre lesdits élément récepteur 25 et élément émetteur 26. Le A-Scan généré suite à la réception des ondes réfléchies par l'élément récepteur 25 est donc erroné.

Les données $E_iR_i$ enregistrées dans la matrice, c'est-à-dire les A-Scans correspondant aux ondes reçues $R_i$ par les différents éléments 7 suite à chaque tir ultrasonore E, sont elles-mêmes erronées. Ce sont alors les A-Scans $E_iR_i$ eux-

mêmes qui doivent être corrigés dans la matrice afin d'obtenir une image nette du tube 1.

De façon analogue à la correction des images partielles ou de la matrice expliquées ci-dessus, la correction des A-Scans consiste à simuler un déplacement relatif entre le tube 1 et le capteur 2 jusqu'à la position de référence afin d'obtenir à générer des A-Scans corrigés correspondant aux A-Scans qui auraient été obtenus en l'absence de mouvement relatif entre le tube 1 et le capteur 2.

Pour expliquer ce phénomène de décalage dans les A-Scans, le cas d'un tir ultrasonore $E_i$ émis par un $i^{ème}$ élément 7 et des ondes reçues $R_i$ suite audit tir ultrasonore $E_i$ reçues par ce même $i^{ème}$ élément 7 est utilisé.

Sous réserve que le milieu de propagation de l'onde ultrasonore $E_i$ entre le capteur 2 et le tube 1 ne soit pas en mouvement par rapport au capteur 2, l'onde réfléchie résultant de l'impact du tir $E_i$ sur la surface externe 5 du tube 1, aussi appelé écho d'interface, n'est pas impacté par la rotation du tube 1. Cet écho d'interface est donc reçu normalement par le $i^{ème}$ transducteur 7.

Comme expliqué ci-dessus, entre l'instant ti d'impact du tir $E_i$ sur la surface externe 5 du tube 1 et l'instant ti+k*dt auquel l'onde réfléchie 16 revient sur la surface externe 5 du tube 1, ledit tube 1 a effectué une rotation d'un angle k*dξ.

Si k*dξ est supérieur à l'angle ω formé par le centre du tube 1 et les centres de deux éléments 7 adjacents, alors une onde réfléchie résultant de l'impact du tir $E_i$ sur le défaut 4 et ressortant selon une direction perpendiculaire à la surface externe 5 du tube 1, qui serait donc reçue par le $i^{ème}$ élément 7 en l'absence de rotation du tube 1, ne ressort pas en vis-à-vis du $i^{ème}$ élément 7. En conséquence, cette onde réfléchie est reçue par un $j^{ème}$ élément distinct du $i^{ème}$ élément 7.

Ainsi, si k*dξ est supérieur à l'angle ω, les A-Scans sont faussés et il est nécessaire de les corriger en prenant en compte la rotation k*dξ du tube 1 durant la propagation du tir ultrasonore $E_i$ dans le tube 1. Comme expliqué ci-dessus et de façon analogue à la prise en compte de la rotation du tube 1 entre deux tirs ultrasonores $E_i$ et $E_{i+1}$ successifs, l'idée est de simuler un déplacement du tube 1 jusqu'à la position de référence, typiquement une inversion du mouvement du tube 1 lorsque la position de référence est la position à l'instant d'émission du tir, pour obtenir des A-Scans corrigés sensiblement analogues aux A-Scans qui seraient obtenus en l'absence de mouvement du tube 1. Pour cela, pour chaque tir ultrasonore E, les A-Scans résultant des ondes reçues R par les différents éléments 7 sont générés dans un premier temps puis corrigés dans un second temps.

Une première étape de la correction des A-Scans consiste à calculer un incrément de temps dtp conduisant à une rotation dlp égale à la distance séparant le centre de deux éléments 7 adjacents. Dans l'exemple illustré sur la figure 9, cela revient à déterminer l'angle ω séparant le centre de deux éléments 7 adjacents et à calculer le temps dtp nécessaire au tube 1 pour effectuer une rotation équivalente à cet angle ω.

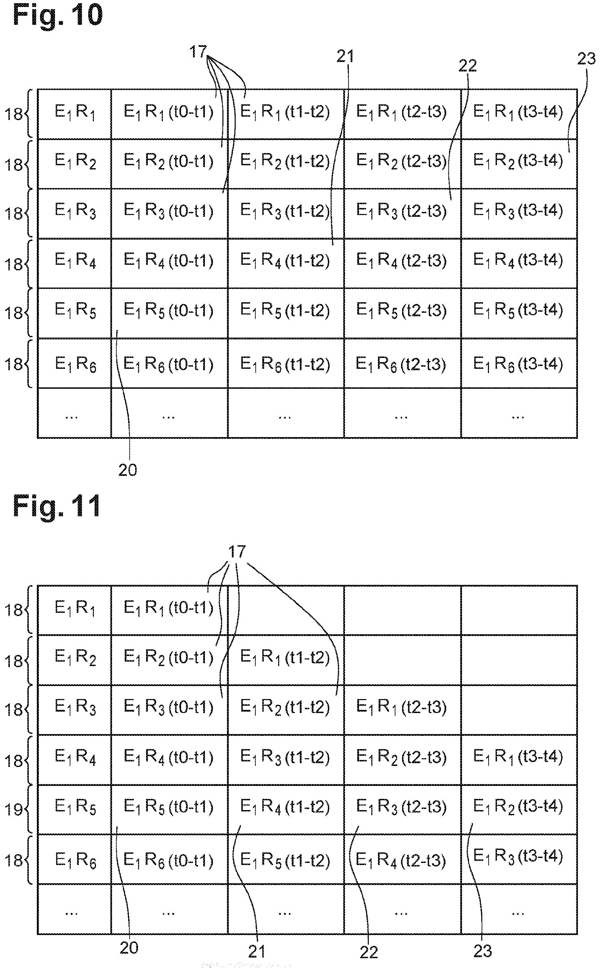

Dans un second temps, les A-Scans sont divisés en blocs 17 d'une durée dtp. Sur les figures 10 et 11, chaque bloc 17 est associé à une référence $E_i R_j(t_x-t_y)$ signifiant qu'il s'agit des ondes reçues R pendant une durée $t_x-t_y$ par un $j^{ème}$ élément suite à un $i^{ème}$ tir ultrasonore.

La figure 10 illustre des A-Scans 18 résultant de la réception par une pluralité d'éléments 7 des ondes reçues R suite à un même tir ultrasonore E. Sur cette figure 10, chaque A-Scan 18 représenté est généré à partir des ondes reçues R par un élément 7 durant une succession d'intervalles de temps dtp. Sur cette figure 10, chacun des A-Scans 18 est donc divisé en une pluralité de blocs temporels 17, chaque bloc temporel 17 ayant une durée dtp correspondant à la durée de rotation du tube 1 nécessaire pour parcourir l'angle ω séparant le centre de deux éléments 7 adjacents.

Comme expliqué ci-dessus, sur un A-Scan 18 illustré sur la figure 10, les différents blocs temporels 17 ne sont pas tous représentatifs d'un cheminement identifié entre l'élément émetteur 26 et l'élément récepteur 25 ayant permis de générer ledit A-Scan au temps de vol correspondant. En effet, du fait de la rotation du tube 1, ces blocs 17 sont générés à partir d'ondes réfléchies reçues par l'élément récepteur 25 mais qui auraient dû être reçues par d'autres éléments 7, du fait de la rotation du tube 1.

La correction d'un A-Scan consiste donc, pour chaque A-Scan généré à partir des ondes reçues R par un élément 7, à sélectionner les blocs 17 qui auraient dû être reçus par un autre élément 7 et associer lesdits blocs 17 à l'élément 7 qui aurait normalement dû recevoir ce bloc 17. Dans le cadre d'une rotation du tube 1, cela revient à décaler les blocs 17 d'un A-Scan d'origine généré à partir des ondes reçues R par un élément 7 vers un A-Scan cible respectif qui aurait normalement reçu les ondes réfléchies correspondant audit bloc 17 en l'absence de rotation du tube 1.

La figure 11 illustre les différents A-Scans corrigés pour les différents éléments 7 à partir des A-Scans d'origine illustrés sur la figure 10.

Sur la figure 10, les $i^{èmes}$ blocs 17 sont générés à partir des ondes reçues R durant les plages temporelles $d_{ti}$ à $d_{ti+1}$. Or, à l'instant $d_{ti}$, le tube 1 a effectué une rotation autour de son axe longitudinal 3 d'un angle i*ω. Les ondes réfléchies représentées dans ces $i^{ème}$ blocs 17 ont été donc été reçues par des éléments 7 décalés de i blocs 17. Autrement dit, l'onde réfléchie reçue par un $k^{ème}$ élément 7 durant la plage temporelle $d_{ti}$ à $d_{ti+1}$ aurait, en l'absence de mouvement relatif entre le capteur 2 et le tube 1, été reçue par un k-$i^{ème}$ élément 7.

La correction des A-Scans 18 par simulation du mouvement inverse du tube 1, dans le cadre d'une position de référence correspondant à l'instant d'émission du tir ultrasonore, peut donc être réalisée en décalant les $i^{èmes}$ blocs 17 de la plage $d_{ti}-d_{ti+1}$ d'un nombre i de A-Scans 18 dans le sens inverse de rotation du tube 1. Autrement dit, pour corriger les A-Scans 18, les blocs 17 $d_{tpi}-d_{tpi+1}$ d'un A-Scan 18 généré par un $n^{ème}$ éléments 7 sont décalés vers le bloc 17 correspondant, c'est-à-dire le bloc 17 de la plage $d_{tpi}$-$d_{tpi+1}$, de l'élément i+n,

Ainsi, sur la figure 11, les blocs 17 des A-Scans 18 illustrés sur la figure 10 sont décalés pour simuler l'inversion du mouvement du tube 1. Les $i^{èmes}$ blocs 17 de chaque ligne de la figure 10 sont donc décalés de i lignes sur la figure 11 pour corriger les A-Scans 18 de la figure 10. Sur la figure 11 obtenue par cette correction, chaque ligne présente donc un A-Scan 18 corrigé correspondant au A-Scan 18 qui aurait été obtenu par l'élément 7 associé à ladite ligne en l'absence de mouvement relatif entre le tube 1 et le capteur 2.

Par comparaison entre la figure 10 et la figure 11, on observe donc que les deuxièmes blocs 17 de chaque ligne L de la figure 10, correspondant à un intervalle de temps $d_{tp1}$-$d_{tp2}$, sont décalés d'une ligne sur la figure 11 pour remplacer le deuxième bloc 17 de la ligne suivante, c'est-à-dire la ligne L+1. De même, les troisièmes blocs 17 de chaque ligne L de la figure 10, correspondant à un intervalle de temps $d_{tp2}$-$d_{tp3}$, sont décalés de deux lignes sur la figure 11 pour remplacer le troisième bloc de la ligne L+2. Par exemple, un A-Scan corrigé 19 de la figure 11 correspondant au cinquième élément 7, typiquement la cinquième ligne de la figure 11, comporte successivement depuis le temps $t_0$ au temps $d_{tp4}$, un premier bloc 20 de la cinquième ligne de la figure 10, un deuxième bloc 21 de la quatrième ligne de la figure 10, un troisième bloc 22 de la troisième ligne de la figure 10 et un quatrième bloc 23 de la deuxième ligne de la figure 10. Ce A-Scan corrigé 19 comporte donc les blocs 20 à 23 correspondants aux ondes reçues R par les différents éléments 7 dans le cadre d'une rotation du tube 1 par rapport au capteur 2 et qui auraient été reçus uniquement par le cinquième éléments 7 s'il n'y avait pas eu de mouvement relatif entre le tube 1 et le capteur 2.

Sur la figure 11, les cases vides correspondent à des blocs 17 présentant un signal d'amplitude nulle pour les A-Scans. Ces blocs 17 sont peu dommageables car ils représentent un signal d'amplitude vide qui ne modifie donc pas l'image obtenue. En tout état de cause, lorsque le décalage entraîne un décalage des blocs 17 du A-Scan d'origine hors du A-Scan cible, la durée du A-Scan cible est avantageusement augmentée d'un nombre de blocs 17 correspondant de façon analogue à l'augmentation virtuelle de la taille de la matrice décrite ci-dessus.

Par ailleurs, afin de faciliter la compréhension de la correction réalisée au niveau des A-Scans 18, les figures 9 à 11 illustrent le cas d'un capteur 2 circulaire de sorte que chaque élément 7 couvre une section circulaire d'angle w identique autour du tube 1. Ainsi, la rotation du tube 1 provoque un décalage dans la réception des ondes réfléchies R qui est identique pour tous les éléments 7 de sorte que la durée $d_{tp}$ de découpage des blocs 17 est identique pour tous les A-Scans 18. Toutefois, l'agencement des éléments 7 peut être réalisé de nombreuses manières. Par exemple, les éléments 7 peuvent être alignés le long d'un axe longitudinal comme c'est le cas dans le mode de réalisation illustré sur les figures 1 et 3. Dans ce cas, il est nécessaire de prendre en compte la courbure du tube 1 par rapport à la position des différents éléments 7. Pour cela, les $d_{tp}$ peuvent être calculés en prenant en compte d'autres paramètres tels que l'angle de sortie des ondes réfléchies ou encore de la projetée de DL sur l'axe 9 d'alignement des éléments 7. Pour chaque élément 7, un tel calcul conduit à obtenir des blocs 17 ayant des durées différentes suivant l'emplacement relatif de l'élément 7 par rapport au tube 1. De même, il est nécessaire de prendre en compte cette différence de durée des blocs 17 entre les différents éléments 7 pour déterminer le décalage des blocs 17 entre les différents éléments 7.

En outre, le déplacement relatif entre le tube 1 et le capteur 2 corrigé dans l'exemple donné ci-dessus à titre illustratif est un déplacement angulaire par rapport à l'axe longitudinal 3 du tube 1. Toutefois ce déplacement pourrait être d'une autre nature comme par exemple une translation le long dudit axe longitudinal 3 ou autre.

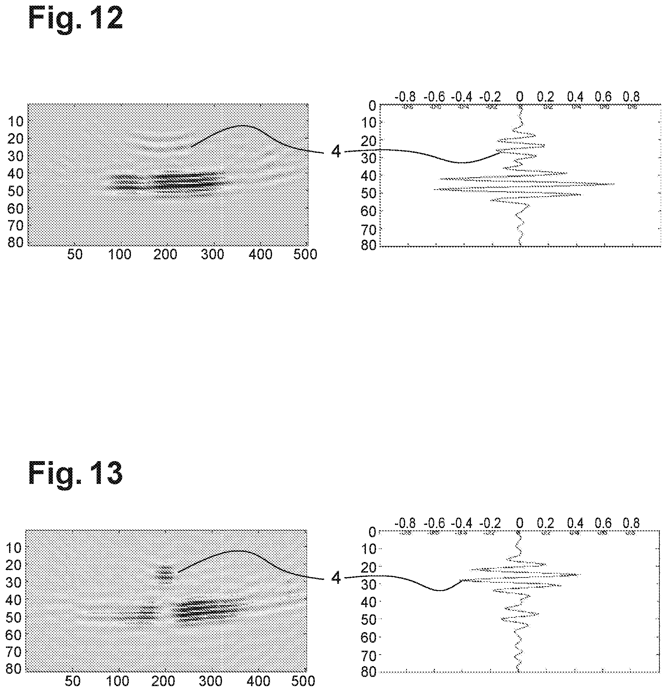

La figure 12 illustre une image brute (partie gauche de la figure) et les amplitudes des pixels de la colonne 150 de cette image brute (partie droite de la figure). Cette image brute est générée à partir des données brutes, c'est-à-dire avant correction selon l'invention, acquises durant un déplacement relatif entre le tube 1 et le capteur 2. Cette image brute montre le défaut 4 dans le tube 1 mais présente un flou important ne permettant pas de caractériser précisément le défaut 4.

La figure 13 illustre l'image corrigée selon la méthode décrite ci-dessus utilisant des images partielles et les amplitudes des pixels de la colonne 150 de cette image corrigée. Cette image corrigée est nette et permet aisément de caractériser le défaut 4 de manière précise et fiable malgré le fait que les données permettant de générer cette image corrigée aient été obtenue au cours d'un déplacement relatif entre le tube 1 et le capteur 2. Le gain d'amplitude sur le défaut apporté par la correction est de 5.7dB. Ainsi, grâce à l'invention, il est possible d'obtenir une image nette et précise d'une pièce à contrôler de façon fiable et rapide, les données permettant d'obtenir cette image corrigée étant acquises durant le déplacement relatif entre le tube 1 et le capteur 2.

La description ci-dessus est faite dans le cadre d'un tube 1 métallique, cependant l'élément à contrôler pourrait être de toute autre nature en termes de forme.

La description ci-dessus est faite dans le cadre d'un capteur comportant des éléments 7 qui sont à la fois aptes à émettre et à recevoir des ondes ultrasonores. Toutefois, un tel capteur pourrait comporter des éléments émetteurs et des éléments récepteurs d'ultrasons distincts.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

Ainsi, les exemples décrits ci-dessus sont réalisés dans le cadre d'un capteur 2 linéaire, cependant le procédé peut être appliqué dans le cadre de capteurs comportant des éléments 7 agencés selon deux dimensions permettant de reconstruire un volume en trois dimensions de façon analogue à la reconstruction décrite ci-dessus pour une reconstruction d'image en deux dimensions. Un tel capteur comporte par exemple une pluralité d'éléments 7 agencés en lignes et en colonnes.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

**Revendications**

1. Procédé d'acquisition dynamique de données représentatives d'une pièce (1) métallique à contrôler, ledit procédé comportant :

   - une étape d'acquisition de données sur la pièce (1) à contrôler, lesdites données étant obtenues par un capteur multi-éléments (2), ledit capteur (2) comportant des éléments émetteurs et des éléments récepteurs, les éléments émetteurs étant configurés pour émettre un tir ultrasonore (E) respectif en direction de la pièce (1) à contrôler de sorte que ledit tir ultrasonore (E) se propage au travers de la pièce (1) à contrôler, un couplant séparant la pièce (1) à contrôler du capteur multi-élément (2) pour permettre la propagation d'ondes ultrasonores, les éléments récepteurs étant configurés pour recevoir des ondes réfléchies (R) par la pièce (1) à contrôler résultant du tir ultrasonore (E), ladite étape d'acquisition comportant :

     - émettre un tir ultrasonore (E) d'émission depuis un dit élément émetteur, et
     - recevoir par lesdits éléments récepteurs, durant une durée d'écoute, des ondes ultrasonores, lesdites ondes ultrasonores reçues comportant une dite onde réfléchie par la pièce (1) à contrôler résultant du tir ultrasonore (E) émis,

   le procédé comportant en outre une étape de génération de données représentatives de la pièce (1) à contrôler en fonction des ondes reçues par les éléments récepteurs, les données représentatives de la pièce (1) à contrôler comportant, pour chaque élément récepteur, un A-Scan (18) respectif représentatif d'une intensité des ondes reçues par ledit récepteur en fonction du temps d'écoute dudit élément récepteur, et en outre, durant l'étape d'acquisition de données, une étape d'entraînement en déplacement, le long et/ou autour d'un axe, de l'un parmi la pièce (1) à contrôler et le capteur (2) de manière à générer un déplacement relatif entre le capteur (2) et la pièce (1) à contrôler,
   et en outre une étape de génération de données corrigées représentatives de la pièce (1) à contrôler, ladite étape de génération des données corrigées comportant :

     - calculer un déplacement correctif en fonction du déplacement relatif entre le capteur (2) et la pièce (1) à contrôler, d'une position de référence et d'une durée par rapport à un instant de référence, la position de référence correspondant à une position relative entre le capteur (2) et la pièce (1) à contrôler à l'instant de référence, ledit instant de référence ayant lieu au cours de l'étape d'acquisition de données, ledit déplacement correctif correspondant à un déplacement relatif entre le capteur (2) et la pièce (1) à contrôler jusqu'à la position de référence depuis une position relative correspondant à la position relative entre le capteur (2) et la pièce (1) à contrôler à un instant de ladite durée par rapport à l'instant de référence, et
     - appliquer aux données représentatives de la pièce (1) à contrôler une correction en fonction du déplacement correctif calculé de manière à générer lesdites données corrigées en simulant un déplacement relatif entre le capteur (2) et la pièce (1) à contrôler depuis une position relative entre le capteur (2) et la pièce (1) à contrôler à l'instant de ladite durée jusqu'à la position de référence.

2. Procédé d'acquisition dynamique selon la revendication 1, dans lequel l'étape de génération des données corrigées comporte une sélection de la position de référence.

3. Procédé d'acquisition dynamique selon la revendication 1 ou 2,

   dans lequel l'étape d'acquisition de données comporte

     - l'émission d'une pluralité de tirs ultrasonores (E), et

- pour chaque étape d'émission d'un dit signal ultrasonore, une étape correspondante, durant une durée d'écoute respective, de réception des ondes ultrasonores par lesdits éléments récepteurs du capteur (2), lesdites ondes ultrasonores reçues comportant au moins une onde réfléchie par la pièce (1) à contrôler résultant du tir ultrasonore émis correspondant

et dans lequel l'instant de référence est un instant d'émission d'un tir ultrasonore de la pluralité de tirs ultrasonores et la durée est un multiple de la durée séparant deux tirs ultrasonores successifs de la pluralité de tirs ultrasonores de sorte que le déplacement correctif est calculé en fonction du déplacement relatif entre le capteur (2) et la pièce (1) à contrôler entre l'émission de deux tirs ultrasonores distincts.

4. Procédé d'acquisition dynamique selon la revendication 3, dans lequel les données représentatives de la pièce (1) à contrôler comportent une image partielle pour la pluralité de tirs ultrasonores (E) émis lors de l'étape d'acquisition, l'application d'une correction aux données représentatives de la pièce (1) à contrôler comportant une étape de modification de l'image partielle pour simuler un déplacement de la pièce (1) à contrôler depuis la position relative entre le capteur (2) et la pièce (1) à contrôler illustrée sur ladite image partielle jusqu'à la position de référence afin de générer une image partielle corrigée.

5. Procédé d'acquisition dynamique selon la revendication 4, comportant en outre une étape de génération d'une image représentative de la pièce (1) à contrôler par superposition d'une pluralité d'image partielles corrigées.

6. Procédé d'acquisition dynamique selon la revendication 3, dans lequel les données représentatives de la pièce (1) à contrôler comportent une matrice, chaque ligne de la matrice comportant les données représentatives de la pièce (1) à contrôler générées suite à un tir ultrasonore (E) respectif, chaque colonne de la matrice comportant les données représentatives de la pièce (1) à contrôler générées à partir d'un élément récepteur respectif du capteur (2), le calcul du déplacement correctif comportant pour chaque tir ultrasonore (E) un calcul d'un décalage de réception respectif en nombre d'éléments récepteur du capteur (2), l'application d'une correction comportant pour chaque ligne de la matrice l'application pour des cellules de ladite ligne d'un décalage, en nombre de colonnes, du contenu desdites cellules du décalage de réception correspondant.

7. Procédé d'acquisition dynamique selon l'une des revendications 1 à 6, dans lequel la durée d'écoute présente un instant de début égal à l'instant d'émission du tir ultrasonore, ladite durée d'écoute étant supérieure ou égale à un temps de vol maximal entre l'émission du tir ultrasonore et la réception par un dit élément récepteur du capteur d'une onde réfléchie par une face de la pièce(1) à contrôler opposée au capteur de sorte que le déplacement correctif est calculé en fonction du déplacement relatif entre le capteur (2) et la pièce (1) à contrôler durant un temps de propagation entre un instant d'émission du tir ultrasonore (E) et un instant de réception des ondes réfléchies par la pièce (1) à contrôler résultant dudit tir ultrasonore (E) par les éléments récepteurs.

8. Procédé d'acquisition dynamique selon l'une des revendications 1 à 7, dans lequel le calcul du déplacement correctif comporte le découpage, pour les A-Scans (18) respectifs des éléments récepteurs, en une pluralité de blocs (17) temporels.

9. Procédé d'acquisition dynamique selon la revendication 8, dans lequel le calcul du déplacement correctif comporte le calcul d'une durée de réception de signal ($d_{tp}$) par un dit élément récepteur de la pluralité d'éléments récepteurs en fonction du déplacement relatif entre le capteur (2) et la pièce (1) à contrôler, et dans lequel, chaque bloc (17) temporel d'un dit A-Scan (18) présente une durée égale à la durée de réception ($d_{tp}$) de l'élément récepteur pour le déplacement relatif du capteur par rapport à la pièce (1) à contrôler.

10. Procédé d'acquisition dynamique selon la revendication 9, dans lequel le calcul du déplacement correctif comporte le calcul d'un décalage en nombre d'éléments récepteurs en fonction des positions relatives des éléments récepteurs, des durées de réception ($d_{tp}$) de signal desdits éléments récepteurs et de l'instant d'émission du signal ultrasonore (E).

11. Procédé d'acquisition dynamique selon la revendication 10, dans lequel, pour un bloc (17) temporel donné d'un A-Scan d'origine, le décalage est égal au nombre maximal d'éléments récepteurs successifs suivants, selon une direction de déplacement relatif entre le capteur (2) et la pièce (1) à contrôler et à partir de l'élément récepteur ayant reçu les ondes réfléchies dudit A-Scan d'origine, dont la somme cumulée des durées de réception de signal ($d_{tp}$) est inférieure à la durée écoulée entre l'instant de référence et l'instant de début dudit bloc (17) temporel.

**12.** Procédé d'acquisition dynamique selon la revendication 11, dans lequel l'application d'une correction comporte pour au moins un bloc (17) temporel du A-Scan d'origine, le remplacement d'une portion d'un A-Scan cible par ledit bloc (17) temporel, ledit A-Scan cible correspondant au A-Scan généré à partir du $n^{ième}$ élément récepteur suivant le récepteur ayant reçu les ondes réfléchies du A-Scan d'origine, dans le sens de déplacement relatif entre le capteur (2) et la pièce (1) à contrôler, n étant le décalage calculé, la portion du A-Scan cible présentant le même instant de début et de fin que le bloc temporel.

**13.** Procédé d'acquisition dynamique selon l'une des revendications 1 à 12, dans lequel le déplacement relatif entre le capteur (2) et la pièce (1) à contrôler résulte d'un déplacement de la pièce (1) à contrôler et du maintien en position fixe du capteur (2) au cours du déplacement de la pièce (1) à contrôler, le déplacement de la pièce (1) à contrôler présentant une composante angulaire autour d'un axe de rotation (3), le calcul d'un déplacement correctif comportant une étape de calcul du déplacement angulaire (dθ) de la pièce (1) à contrôler au cours dudit déplacement relatif entre le capteur (2) et la pièce (1) à contrôler.

**14.** Procédé d'acquisition dynamique selon la revendication 13, dans lequel le calcul d'un déplacement correctif comporte une étape de calcul du déplacement angulaire de la pièce (1) à contrôler au cours dudit déplacement relatif entre le capteur (2) et la pièce (1) à contrôler et dans lequel la correction des données représentatives de la pièce (1) à contrôler comporte la simulation d'une rotation de la pièce (1) à contrôler autour de son axe de rotation (3) selon un angle de déplacement angulaire de la pièce (1) à contrôler au cours de l'étape d'acquisition jusqu'à la position de référence.


**Patentansprüche**

**1.** Verfahren zur dynamischen Erfassung von Daten, die für ein zu prüfendes metallisches Teil (1) repräsentativ sind, wobei das Verfahren umfasst:

- einen Schritt des Erfassens von Daten an dem zu prüfenden Teil (1), wobei die Daten von einem Mehrelementesensor (2) erhalten werden, wobei der Sensor (2) Sendeelemente und Empfangselemente umfasst, wobei die Sendeelemente dazu ausgestaltet sind, einen jeweiligen Ultraschallschuss (E) in Richtung des zu prüfenden Teils (1) zu senden, so dass sich der Ultraschallschuss (E) durch das zu prüfende Teil (1) hindurch ausbreitet, wobei ein Kopplungsmittel das zu prüfende Teil (1) von dem Mehrelementesensor (2) trennt, um die Ausbreitung von Ultraschallwellen zu ermöglichen, wobei die Empfangselemente dazu ausgestaltet sind, von dem zu prüfenden Teil (1) reflektierte Wellen (R), die aus dem Ultraschallschuss (E) stammen, zu empfangen, wobei der Schritt des Erfassens umfasst:

- Senden eines Sende-Ultraschallschusses (E) von einem Sendeelement aus, und
- Empfangen durch die Empfangselemente, während einer Hördauer, der Ultraschallwellen, wobei die empfangenen Ultraschallwellen eine von dem zu prüfenden Teil (1) reflektierte Welle umfassen, die aus dem gesendeten Ultraschallschuss (E) stammt, wobei das Verfahren ferner einen Schritt des Erzeugens von für das zu prüfende Teil (1) repräsentativen Daten in Abhängigkeit von den von den Empfangselementen empfangenen Wellen umfasst,

wobei die für das zu prüfende Teil (1) repräsentativen Daten, für jedes Empfangselement, ein jeweiliges A-Bild (18) umfassen, das für eine Intensität der von dem Empfänger empfangenen Wellen in Abhängigkeit von der Hörzeit des Empfangselements repräsentativ ist, und ferner, während des Schritts des Erfassens von Daten, einen Schritt des Bewegens, entlang und/oder um eine Achse, von einem unter dem zu prüfenden Teil (1) und dem Sensor (2), so dass eine relative Bewegung zwischen dem Sensor (2) und dem zu prüfenden Teil (1) erzeugt wird, und ferner einen Schritt des Erzeugens von korrigierten Daten, die für das zu prüfende Teil (1) repräsentativ sind, wobei der Schritt des Erzeugens der korrigierten Daten umfasst:

- Berechnen einer Korrekturbewegung in Abhängigkeit von der relativen Bewegung zwischen dem Sensor (2) und dem zu prüfenden Teil (1), von einer Referenzposition und von einer Dauer in Bezug auf einen Referenzzeitpunkt, wobei die Referenzposition einer relativen Position zwischen dem Sensor (2) und dem zu prüfenden Teil (1) zu dem Referenzzeitpunkt entspricht, wobei der Referenzzeitpunkt während des Schritts des Erfassens von Daten stattfindet, wobei die Korrekturbewegung einer relativen Bewegung zwischen dem Sensor (2) und dem zu prüfenden Teil (1) bis zu der Referenzposition von einer relativen Position aus entspricht, die der relativen Position zwischen dem Sensor (2) und dem zu prüfenden Teil (1) zu einem Zeitpunkt der Dauer in Bezug auf den Referenzzeitpunkt entspricht, und

- Anwenden auf die für das zu prüfende Teil (1) repräsentativen Daten einer Korrektur in Abhängigkeit von der berechneten Korrekturbewegung, so dass die korrigierten Daten erzeugt werden, indem eine relative Bewegung zwischen dem Sensor (2) und dem zu prüfenden Teil (1) von einer relativen Position zwischen dem Sensor (2) und dem zu prüfenden Teil (1) zu dem Zeitpunkt der Dauer aus bis zu der Referenzposition simuliert wird.

2. Verfahren zur dynamischen Erfassung nach Anspruch 1, wobei der Schritt des Erzeugens der korrigierten Daten ein Auswählen der Referenzposition umfasst.

3. Verfahren zur dynamischen Erfassung nach Anspruch 1 oder 2, wobei der Schritt des Erfassens von Daten umfasst

- das Senden einer Vielzahl von Ultraschallschüssen (E), und
- für jeden Schritt des Sendens eines Ultraschallsignals einen entsprechenden Schritt, während einer jeweiligen Hördauer, des Empfangens der Ultraschallwellen durch die Empfangselemente des Sensors (2), wobei die empfangenen Ultraschallwellen mindestens eine von dem zu prüfenden Teil (1) reflektierte Welle umfassen, die aus dem entsprechenden gesendeten Ultraschallschuss stammt,

und wobei der Referenzzeitpunkt ein Sendezeitpunkt eines Ultraschallschusses der Vielzahl von Ultraschallschüssen ist und die Dauer ein Vielfaches der Dauer ist, die zwei aufeinander folgende Ultraschallschüsse der Vielzahl von Ultraschallschüssen trennt, so dass die Korrekturbewegung in Abhängigkeit von der relativen Bewegung zwischen dem Sensor (2) und dem zu prüfenden Teil (1) zwischen dem Senden von zwei verschiedenen Ultraschallschüssen berechnet wird.

4. Verfahren zur dynamischen Erfassung nach Anspruch 3, wobei die für das zu prüfende Teil (1) repräsentativen Daten ein Teilbild für die Vielzahl von bei dem Schritt des Erfassens gesendeten Ultraschallschüssen (E) umfasst, wobei das Anwenden einer Korrektur auf die für das zu prüfende Teil (1) repräsentativen Daten einen Schritt des Änderns des Teilbilds umfassen, um eine Bewegung des zu prüfenden Teils (1) von der relativen Position zwischen dem Sensor (2) und dem zu prüfenden Teil (1) aus, die auf dem Teilbild dargestellt ist, bis zu der Referenzposition zu simulieren, um ein korrigiertes Teilbild zu erzeugen.

5. Verfahren zur dynamischen Erfassung nach Anspruch 4, umfassend ferner einen Schritt des Erzeugens eines für das zu prüfende Teil (1) repräsentativen Bilds durch Überlagerung einer Vielzahl von korrigierten Teilbildern.

6. Verfahren zur dynamischen Erfassung nach Anspruch 3, wobei die für das zu prüfende Teil (1) repräsentativen Daten eine Matrix umfassen, wobei jede Zeile der Matrix die für das zu prüfende Teil (1) repräsentativen Daten umfasst, die nach einem jeweiligen Ultraschallschuss (E) erzeugt werden, wobei jede Spalte der Matrix die für das zu prüfende Teil (1) repräsentativen Daten umfasst, die ausgehend von einem jeweiligen Empfangselement des Sensors (2) erzeugt werden, wobei das Berechnen der Korrekturbewegung für jeden Ultraschallschuss (E) ein Berechnen eines jeweiligen Empfangsversatzes um eine Anzahl von Empfangselementen des Sensors (2) umfasst, wobei das Anwenden einer Korrektur für jede Zeile der Matrix das Anwenden für Zellen der Zeile eines Versatzes, um eine Anzahl von Spalten, des Inhalts der Zellen des entsprechenden Empfangsversatzes umfasst.

7. Verfahren zur dynamischen Erfassung nach einem der Ansprüche 1 bis 6, wobei die Hördauer einen Beginnzeitpunkt aufweist, der gleich dem Sendezeitpunkt des Ultraschallschusses ist, wobei die Hördauer größer oder gleich einer maximalen Flugzeit zwischen dem Senden des Ultraschallschusses und dem Empfangen durch ein Empfangselement des Sensors einer von einer Seite des zu prüfenden Teils (1), die zu dem Sensor entgegengesetzt ist, reflektierten Welle ist, so dass die Korrekturbewegung in Abhängigkeit von der relativen Bewegung zwischen dem Sensor (2) und dem zu prüfenden Teil (1) während einer Laufzeit zwischen einem Sendezeitpunkt des Ultraschallschusses (E) und einem Empfangszeitpunkt der von dem zu prüfenden Teil (1) reflektierten Wellen, die aus dem Ultraschallschuss (E) stammen, durch die Empfangselemente berechnet wird.

8. Verfahren zur dynamischen Erfassung nach einem der Ansprüche 1 bis 7, wobei das Berechnen der Korrekturbewegung das Zerlegen, für die jeweiligen A-Bilder (18) der Empfangselemente, in eine Vielzahl von Zeitblöcken (17) umfasst.

9. Verfahren zur dynamischen Erfassung nach Anspruch 8, wobei das Berechnen der Korrekturbewegung das Berechnen einer Signalempfangsdauer ($d_{tp}$) durch ein Empfangselement der Vielzahl von Empfangselementen in Abhängigkeit von der relativen Bewegung zwischen dem Sensor (2) und dem zu prüfenden Teil (1) umfasst und wobei jeder Zeitblock (17) eines A-Bilds (18) eine Dauer gleich der Empfangsdauer ($d_{tp}$) des Empfangselements für die relative Bewegung des Sensors in Bezug auf das zu prüfende Teil (1) aufweist.

10. Verfahren zur dynamischen Erfassung nach Anspruch 9, wobei das Berechnen der Korrekturbewegung das Berechnen eines Versatzes um eine Anzahl von Empfangselementen in Abhängigkeit von den relativen Positionen der Empfangselemente, von den Signalempfangsdauern ($d_{tp}$) der Empfangselemente und von dem Sendezeitpunkt des Ultraschallsignals (E) umfasst.

11. Verfahren zur dynamischen Erfassung nach Anspruch 10, wobei, für einen gegebenen Zeitblock (17) eines ursprünglichen A-Bilds, der Versatz gleich der maximalen Anzahl von aufeinander folgenden Empfangselementen entlang einer Richtung einer relativen Bewegung zwischen dem Sensor (2) und dem zu prüfenden Teil (1) und ausgehend von dem Empfangselement, das die reflektierten Wellen des ursprünglichen A-Bilds empfangen hat, ist, dessen kumulierte Summe der Signalempfangsdauern ($d_{tp}$) kleiner als die Dauer ist, die zwischen dem Referenzzeitpunkt und dem Beginnzeitpunkt des Zeitblocks (17) vergangen ist.

12. Verfahren zur dynamischen Erfassung nach Anspruch 11, wobei das Anwenden einer Korrektur für mindestens einen Zeitblock (17) des ursprünglichen A-Bilds das Ersetzen eines Abschnitts eines Ziel-A-Bilds durch den Zeitblock (17) umfasst, wobei das Ziel-A-Bild dem A-Bild entspricht, das ausgehend von dem n-ten Empfangselement erzeugt wird, das auf den Empfänger, der die reflektierten Wellen des ursprünglichen A-Bilds empfangen hat, in Richtung der relativen Bewegung zwischen dem Sensor (2) und dem zu prüfenden Teil (1) folgt, wobei n der berechnete Versatz ist, wobei der Abschnitt des Ziel-A-Bilds den gleichen Beginn- und Endezeitpunkt wie der Zeitblock aufweist.

13. Verfahren zur dynamischen Erfassung nach einem der Ansprüche 1 bis 12, wobei die relative Bewegung zwischen dem Sensor (2) und dem zu prüfenden Teil (1) aus einer Bewegung des zu prüfenden Teils (1) und dem Halten des Sensors (2) in einer Fixposition während der Bewegung des zu prüfenden Teils (1) resultiert, wobei die Bewegung des zu prüfenden Teils (1) eine Winkelkomponente um eine Rotationsachse (3) aufweist, wobei das Berechnen einer Korrekturbewegung einen Schritt des Berechnens der Winkelbewegung ($d\theta$) des zu prüfenden Teils (1) während der relativen Bewegung zwischen dem Sensor (2) und dem zu prüfenden Teil (1) umfasst.

14. Verfahren zur dynamischen Erfassung nach Anspruch 13, wobei das Berechnen einer Korrekturbewegung einen Schritt des Berechnens der Winkelbewegung des zu prüfenden Teils (1) während der relativen Bewegung zwischen dem Sensor (2) und dem zu prüfenden Teil (1) umfasst und wobei das Korrigieren der für das zu prüfende Teil (1) repräsentativen Daten das Simulieren einer Rotation des zu prüfenden Teils (1) um seine Rotationsachse (3) gemäß einem Winkel einer Winkelbewegung des zu prüfenden Teils (1) während des Schritts des Erfassens bis zu der Referenzposition umfasst.

**Claims**

1. A method for dynamically acquiring data representing a metal part (1) to be tested, said method comprising:

   - a step of acquiring data concerning the part (1) to be tested, said data being obtained by a multi-element sensor (2), said sensor (2) comprising transmitting elements and receiving elements, the transmitting elements being configured to transmit a respective ultrasonic shot (E) toward the part (1) to be tested so that said ultrasonic shot (E) propagates through the part (1) to be tested, a coupling separating the part (1) to be tested from the multi-element sensor (2) to allow propagation of the ultrasonic waves, the receiving elements being configured to receive waves reflected (R) by the part (1) to be tested resulting from the ultrasonic shot (E), said acquisition step comprising:

      - transmitting an ultrasonic transmission shot (E) from one of said transmitting elements; and
      - said receiving elements receiving, during a listening duration, ultrasonic waves, with said received ultrasonic waves comprising one of said waves reflected by the part (1) to be tested resulting from the transmitted ultrasonic shot (E);

   the method further comprising a step of generating data representing the part (1) to be tested as a function of the waves received by the receiving elements;
   the data representing the part (1) to be tested comprising, for each receiving element, a respective A-Scan (18) representing an intensity of the waves received by said receiver as a function of the listening time of said receiving element, and further, during the data acquisition step, a step of moving, along and/or around an axis, one from among the part (1) to be tested and the sensor (2) so as to generate a relative movement between the sensor (2) and the part (1) to be tested;

and further a step of generating corrected data representing the part (1) to be tested, with said step of generating corrected data comprising:

- computing a corrective movement as a function of the relative movement between the sensor (2) and the part (1) to be tested, of a reference position and of a duration relative to a reference instant, with the reference position corresponding to a relative position between the sensor (2) and the part (1) to be tested at the reference instant, with said reference instant having occurred during the data acquisition step, said corrective movement corresponding to a relative movement between the sensor (2) and the part (1) to be tested up to the reference position from a relative position corresponding to the relative position between the sensor (2) and the part (1) to be tested at an instant of said duration relative to the reference instant; and
- applying a correction to the data representing the part (1) to be tested as a function of the computed corrective movement so as to generate said corrected data by simulating a relative movement between the sensor (2) and the part (1) to be tested from a relative position between the sensor (2) and the part (1) to be tested at the instant of said duration up to the reference position.

2. The dynamic acquisition method as claimed in claim 1, wherein the step of generating corrected data comprises selecting the reference position.

3. The dynamic acquisition method as claimed in claim 1 or 2,
wherein the data acquisition step comprises:

- transmitting a plurality of ultrasonic shots (E); and
- for each step of transmitting one of said ultrasonic signals, a corresponding step, during a respective listening duration, of said receiving elements of the sensor (2) receiving ultrasonic waves, with said received ultrasonic waves comprising at least one wave reflected by the part (1) to be tested resulting from the corresponding transmitted ultrasonic shot;

and wherein the reference instant is a transmission instant of an ultrasonic shot of the plurality of ultrasonic shots and the duration is a multiple of the duration separating two successive ultrasonic shots of the plurality of ultrasonic shots so that the corrective movement is computed as a function of the relative movement between the sensor (2) and the part (1) to be tested between the transmission of two separate ultrasonic shots.

4. The dynamic acquisition method as claimed in claim 3, wherein the data representing the part (1) to be tested comprises a partial image for the plurality of ultrasonic shots (E) transmitted during the acquisition step, the application of a correction to the data representing the part (1) to be tested comprising a step of modifying the partial image in order to simulate a movement of the part (1) to be tested from the relative position between the sensor (2) and the part (1) to be tested illustrated in said partial image up to the reference position in order to generate a corrected partial image.

5. The dynamic acquisition method as claimed in claim 4, further comprising a step of generating an image representing the part (1) to be tested by superimposing a plurality of corrected partial images.

6. The dynamic acquisition method as claimed in claim 3, wherein the data representing the part (1) to be tested comprises a matrix, with each row of the matrix comprising the data representing the part (1) to be tested generated following a respective ultrasonic shot (E), with each column of the matrix comprising the data representing the part (1) to be tested generated from a respective receiving element of the sensor (2), the computation of the corrective movement comprising, for each ultrasonic shot (E), a computation of a respective reception offset in terms of the number of receiving elements of the sensor (2), the application of a correction comprising, for each row of the matrix, the application, for cells of said row, of an offset, in terms of the number of columns, of the content of said cells of the corresponding reception offset.

7. The dynamic acquisition method as claimed in any of claims 1 to 6, wherein the listening duration has a start instant equal to the transmission instant of the ultrasonic shot, with said listening duration being greater than or equal to a maximum time of flight between the transmission of the ultrasonic shot and the reception, by one of said receiving elements of the sensor, of a wave reflected by a face of the part (1) to be tested opposite the sensor so that the corrective movement is computed as a function of the relative movement between the sensor (2) and the part (1) to be tested during a propagation time between a transmission instant of the ultrasonic shot (E) and a reception instant by the receiving elements of the waves reflected by the part (1) to be tested resulting from said ultrasonic shot (E).

8. The dynamic acquisition method as claimed in any one of claims 1 to 7, wherein computing the corrective movement comprises dividing the respective A-Scans (18) of the receiving elements into a plurality of time blocks (17).

9. The dynamic acquisition method as claimed in claim 8, wherein computing the corrective movement comprises computing a signal reception duration (dtp) by one of said receiving elements of the plurality of receiving elements as a function of the relative movement between the sensor (2) and the part (1) to be tested, and wherein each time block (17) of one of said A-Scans (18) has a duration equal to the reception duration (dtp) of the receiving element for the relative movement of the sensor relative to the part (1) to be tested.

10. The dynamic acquisition method as claimed in claim 9, wherein computing the corrective movement comprises computing an offset in terms of the number of receiving elements as a function of the relative positions of the receiving elements, the signal reception durations (dtp) of said receiving elements and the transmission instant of the ultrasonic signal (E).

11. The dynamic acquisition method as claimed in claim 10, wherein, for a given time block (17) of an original A-Scan, the offset is equal to the maximum number of the next successive receiving elements in a direction of relative movement between the sensor (2) and the part (1) to be tested and originating from the receiving element that received the reflected waves of said original A-Scan, for which the cumulative sum of the signal reception durations (dtp) is less than the elapsed time between the reference instant and the start instant of said time block (17).

12. The dynamic acquisition method as claimed in claim 11, wherein applying a correction comprises, for at least one time block (17) of the original A-Scan, replacing a portion of a target A-Scan with said time block (17), with said target A-Scan corresponding to the A-Scan generated from the nth receiving element after the receiver that received the reflected waves of the original A-Scan, in the direction of relative movement between the sensor (2) and the part (1) to be tested, with n being the computed offset, the portion of the target A-Scan having the same start and end instant as the time block.

13. The dynamic acquisition method as claimed in any of claims 1 to 12, wherein the relative movement between the sensor (2) and the part (1) to be tested results from a movement of the part (1) to be tested and from the sensor (2) being held in a fixed position during the movement of the part (1) to be tested, with the movement of the part (1) to be tested having an angular component about an axis of rotation (3), the computation of a corrective movement comprising a step of computing the angular movement ($d\theta$) of the part (1) to be tested during said relative movement between the sensor (2) and the part (1) to be tested.

14. The dynamic acquisition method as claimed in claim 13, wherein computing a corrective movement comprises a step of computing the angular movement of the part (1) to be tested during said relative movement between the sensor (2) and the part (1) to be tested, and wherein correcting the data representing the part (1) to be tested comprises simulating a rotation of the part (1) to be tested about its axis of rotation (3) at an angle of angular movement of the part (1) to be tested during the acquisition step up to the reference position.

# Fig. 1

# Fig. 2

| 11 | 11 | | 11 | 11 |
|---|---|---|---|---|
| $E_1 R_1$ | $E_1 R_2$ | ... | $E_1 R_{n-1}$ | $E_1 R_n$ |
| $E_2 R_1$ | $E_2 R_2$ | ... | $E_2 R_{n-1}$ | $E_2 R_n$ |
| ... | ... | ... | ... | ... |
| $E_n R_1$ | $E_n R_2$ | ... | $E_n R_{n-1}$ | $E_n R_n$ |

# Fig. 3

# Fig. 4

# Fig. 5

# Fig. 6

# Fig. 7

## Fig. 8

| | | | | E1-R4 (s et d) | |
|---|---|---|---|---|---|
| | | | E2-R4 (d) ← | E2-R4 (s) → | |
| | | E3-R4 (d) ← | | E3-R4 (s) → | |
| | | | | | |
| | | | | | |
| | | | | | |

## Fig. 9

## Fig. 10

| | 17 | | 21 | 22 | 23 |
|---|---|---|---|---|---|
| $E_1R_1$ | $E_1R_1$ (t0-t1) | $E_1R_1$ (t1-t2) | $E_1R_1$ (t2-t3) | $E_1R_1$ (t3-t4) |
| $E_1R_2$ | $E_1R_2$ (t0-t1) | $E_1R_2$ (t1-t2) | $E_1R_2$ (t2-t3) | $E_1R_2$ (t3-t4) |
| $E_1R_3$ | $E_1R_3$ (t0-t1) | $E_1R_3$ (t1-t2) | $E_1R_3$ (t2-t3) | $E_1R_3$ (t3-t4) |
| $E_1R_4$ | $E_1R_4$ (t0-t1) | $E_1R_4$ (t1-t2) | $E_1R_4$ (t2-t3) | $E_1R_4$ (t3-t4) |
| $E_1R_5$ | $E_1R_5$ (t0-t1) | $E_1R_5$ (t1-t2) | $E_1R_5$ (t2-t3) | $E_1R_5$ (t3-t4) |
| $E_1R_6$ | $E_1R_6$ (t0-t1) | $E_1R_6$ (t1-t2) | $E_1R_6$ (t2-t3) | $E_1R_6$ (t3-t4) |
| ... | ... | ... | ... | ... |

20

## Fig. 11

| | 17 | | | |
|---|---|---|---|---|
| $E_1R_1$ | $E_1R_1$ (t0-t1) | | | |
| $E_1R_2$ | $E_1R_2$ (t0-t1) | $E_1R_1$ (t1-t2) | | |
| $E_1R_3$ | $E_1R_3$ (t0-t1) | $E_1R_2$ (t1-t2) | $E_1R_1$ (t2-t3) | |
| $E_1R_4$ | $E_1R_4$ (t0-t1) | $E_1R_3$ (t1-t2) | $E_1R_2$ (t2-t3) | $E_1R_1$ (t3-t4) |
| $E_1R_5$ | $E_1R_5$ (t0-t1) | $E_1R_4$ (t1-t2) | $E_1R_3$ (t2-t3) | $E_1R_2$ (t3-t4) |
| $E_1R_6$ | $E_1R_6$ (t0-t1) | $E_1R_5$ (t1-t2) | $E_1R_4$ (t2-t3) | $E_1R_3$ (t3-t4) |
| ... | ... | ... | ... | ... |

20 21 22 23

# Fig. 12

# Fig. 13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5299576 A

- US 10156549 B